# EUROPEAN PATENT SPECIFICATION

(11) **EP 4 492 859 B1**
(45) Date of publication and mention of the grant of the patent: **01.07.2026**
(21) Application number: 23777740.4
(22) Date of filing: 01.03.2023
(51) Int. Cl.: H04L 47/31, H04L 47/32, H04L 47/20, H04W 28/02, H04W 28/06

(54) **MEDIA UNIT TRANSMISSION METHOD AND APPARATUS**
MEDIENEINHEITSÜBERTRAGUNGSVERFAHREN UND -VORRICHTUNG
PROCÉDÉ ET APPAREIL DE TRANSMISSION D'UNITÉ MULTIMÉDIA

(30) Priority: 26.03.2022 CN 202210321856
(43) Date of publication of application: 15.01.2025
(73) Proprietor: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN); ZONG, Zaifeng, Shenzhen, Guangdong 518129 (CN)
(74) Representative: MERH-IP Matias Erny Reichl Hoffmann Patentanwälte PartG mbB
(86) International application number: PCT/CN2023/079130
(87) International publication number: WO 2023/185362

(56) References cited:
- CN-A- 101 729 228
- CN-A- 114 531 429
- US-A1- 2008 175 148
- US-A1- 2008 175 148
- US-A1- 2015 117 205

## Description

### CROSS-REFERENCE TO RELATED APPLICATIONS

This application claims priority to Chinese Patent Application No. 202210321856.3, filed with the China National Intellectual Property Administration on March 26, 2022 and entitled "MEDIA UNIT TRANSMISSION METHOD AND APPARATUS".

### TECHNICAL FIELD

Embodiments of this application relate to the communication field, and in particular, to a media unit transmission method and an apparatus.

### BACKGROUND

When congestion occurs on a base station, the base station may alleviate the congestion by randomly discarding data packets. Because the data packets are randomly discarded, the randomly discarded data packets may belong to a plurality of data frames. Consequently, data in the plurality of data frames is incomplete. For example, when the base station randomly discards 10 lost packets due to the congestion, if the 10 data packets belong to 10 different data frames, data in the 10 data frames is incomplete. In a video transmission scenario, when data in a plurality of data frames is incomplete, screen blurring may occur at a receive end of data packets. Document US 2008/175148 A1 generally relates to system and method for reducing the bandwidth of MPEG transport streams during transmission over a packet-switched network. The system and method identify characteristics of a plurality of media fragments disposed within each of a plurality of packets of a transport stream, and aggregate the characteristics into a summary value for each of the packets. The summary value is correlated to a priority weighting identifiable by a network element. Each of the packets is marked with the priority weighting, so that the packets may be selectively dropped by a network element in accordance with their priority weightings to reduce the bandwidth of the transport stream.

### SUMMARY

This application provides a media unit transmission method and an apparatus, to resolve a problem that data in a plurality of data frames is incomplete because data packets are randomly discarded. In particular, this application provides media unit transmission methods, a communication apparatus, a computer-readable storage medium, and a communication system, having the features of respective independent claims. The dependent claims relate to preferred embodiments.

According to a first aspect, this application provides a media unit transmission method. The method includes: A user plane network element receives a media unit, where the media unit includes a plurality of data packets. The user plane network element sets marking information for the media unit, where the marking information is for determining that the media unit is a media unit allowed to be discarded. The user plane network element sends the media unit that carries the marking information.

In this application, that the marking information is for determining that the media unit is a media unit allowed to be discarded may also be understood as: The marking information is for determining that the media unit is a media unit to be preferentially discarded, or the marking information is for determining to discard the media unit.

According to the foregoing method, the user plane network element sets the marking information for the received media unit, so that all the data packets included in the media unit can be discarded at a granularity of the media unit, to avoid significant degradation in video quality caused by random discarding of a data packet.

In a possible design, when the user plane network element sets the marking information for the media unit, the user plane network element sets the marking information for the media unit when the media unit is the media unit allowed to be discarded. The marking information indicates that the media unit is the media unit allowed to be discarded.

For example, the marking information may be set in a data packet that belongs to the media unit, or may be set in an encapsulation protocol data packet for transmitting a data packet of the media unit, for example, set in a protocol header of a GPRS tunneling protocol (GPRS tunneling protocol, GTP) for transmitting the data packet of the media unit.

According to the foregoing design, the user plane network element may identify the media unit allowed to be discarded, to set the marking information for the media unit allowed to be discarded, so that an access network device discards the media unit based on the marking information.

In a possible design, the user plane network element receives, from a session management network element or an application server, information for determining the media unit allowed to be discarded.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

According to the foregoing design, the session management network element sends signaling to the user plane network element. The signaling may carry the information for determining the media unit allowed to be discarded, for example, at least one of the type information of the media unit allowed to be discarded, the location information of the media unit allowed to be discarded, or the sequence number of the media unit allowed to be discarded. The user plane network element may determine whether a type of the received media unit is a type indicated by the type information of the media unit allowed to be discarded, whether a location of the received media unit is a location indicated by the location information of the media unit allowed to be discarded, or whether a sequence number of the received media unit is the sequence number of the media unit allowed to be discarded. Therefore, the user plane network element may determine, in a plurality of determining manners, the media unit allowed to be discarded. Alternatively, a data packet in a service data flow sent by the application server may carry the information for determining the media unit allowed to be discarded, for example, the media unit discarding allowance indication information or the type information of the media unit.

In a possible design, the marking information indicates importance information of the media unit. When the user plane network element sets the marking information for the media unit, the user plane network element determines the importance information of the media unit, and sets the marking information for the media unit based on the importance information of the media unit. In this case, that the marking information is for determining that the media unit is a media unit allowed to be discarded may also be understood as discarding the media unit based on the importance information of the media unit.

For example, the user plane network element may determine the importance information of the media unit based on a type of the media unit (where for example, the user plane network element determines the importance information of the media unit based on the type of the media unit and a correspondence between a type and importance), determine the importance information of the media unit based on a location of the media unit, or determine the importance information of the media unit based on a traffic characteristic of the media unit. Further, the user plane network element sets the marking information for the media unit based on the importance information of the media unit.

According to the foregoing design, the user plane network element may set the marking information for the media unit based on the importance information of the media unit, so that an access network device discards the media unit based on the importance information of the media unit. Importance of different media units may be the same or may be different. The importance may include a plurality of values. In this case, the identification information may also be referred to as importance marking information, importance level information, priority information, or the like, and the importance may also be referred to as a priority.

In a possible design, the marking information indicates type information of the media unit. When the user plane network element sets the marking information for the media unit, the user plane network element determines a type of the media unit, and sets the marking information for the media unit based on the type information of the media unit. In this case, that the marking information is for determining that the media unit is a media unit allowed to be discarded may also be understood as discarding the media unit based on the type information of the media unit.

According to the foregoing design, the user plane network element sets the marking information for the media unit based on the type information of the media unit, so that an access network device discards the media unit based on the type information of the media unit. There may be a plurality of types of media units.

In a possible design, the marking information indicates discarding priority information of the media unit. When the user plane network element sets the marking information for the media unit, the user plane network element determines the discarding priority information of the media unit, and sets the marking information for the media unit based on the discarding priority information of the media unit. Discarding priorities of different media units may be the same or may be different. The discarding priority may include a plurality of values. In this case, the identification information may also be referred to as the discarding priority information. In this case, that the marking information is for determining that the media unit is a media unit allowed to be discarded may also be understood as discarding the media unit based on the discarding priority information of the media unit.

According to the foregoing design, the user plane network element may set the marking information for the media unit based on a discarding priority of the media unit, so that an access network device discards the media unit based on the discarding priority of the media unit.

In a possible design, the user plane network element receives first indication information from the session management network element, and sets the marking information for the received media unit based on the first indication information. The first indication information may be explicitly expressed or implicitly expressed.

In a possible design, the user plane network element sets an identifier of a media unit group for the media unit, where the media unit group includes at least one media unit.

For example, the identifier of the media unit group may be set in a data packet that belongs to the media unit, or may be set in an encapsulation protocol data packet for transmitting a data packet of the media unit, for example, set in a protocol header of a GPRS tunneling protocol (GPRS tunneling protocol, GTP) for transmitting the data packet of the media unit.

According to the foregoing design, the access network device may identify the media unit group.

In a possible design, the user plane network element receives third indication information from the session management network element, and sets the identifier of the media unit group for a data packet in the received media unit based on the third indication information. The third indication information indicates to set a same identifier of a media unit group for media units that belong to the same media unit group. This may also be understood as: The third indication information is for setting identification information of the media unit group for the media unit, where the identification information of the media unit group indicates the identifier of the media unit group to which the media unit belongs. The third indication information may be explicitly expressed or implicitly expressed.

In a possible design, the user plane network element sets an identifier of the media unit for a data packet included in the media unit.

For example, the identifier of the media unit may be set in a data packet that belongs to the media unit, or may be set in an encapsulation protocol data packet for transmitting a data packet of the media unit, for example, set in a protocol header of a GPRS tunneling protocol for transmitting the data packet of the media unit.

According to the foregoing design, the access network device may identify the media unit.

In a possible design, the marking information is the identifier of the media unit. In this case, that the marking information is for determining that the media unit is a media unit allowed to be discarded may be understood as: The media unit that carries the identifier of the media unit is the media unit allowed to be discarded, the media unit that carries the marking information is the media unit allowed to be discarded, the media unit is discarded based on the identifier of the media unit, or the identifier of the media unit implicitly carries the marking information.

In a possible design, the user plane network element receives second indication information from the session management network element, and sets the identifier of the media unit for the data packet in the received media unit based on the second indication information. The second indication information indicates the user plane network element to set a same identifier of a media unit for data packets that belong to the same media unit. This may also be understood as: The second indication information indicates the user plane network element to set the identifier of the media unit for the media unit, or the second indication information indicates the user plane network element to set the identifier of the media unit for a data packet in the media unit. The second indication information may be explicitly expressed or implicitly expressed.

In a possible design, when the user plane network element sets the marking information for the media unit, the user plane network element sets the marking information for a first data packet in the media unit, the user plane network element sets the marking information for a last data packet in the media unit, or the user plane network element separately sets the marking information for all the data packets in the media unit.

For example, the marking information may be set in the data packet that belongs to the media unit, or may be set in the encapsulation protocol data packet for transmitting the data packet of the media unit, for example, set in the protocol header of the GPRS tunneling protocol for transmitting the data packet of the media unit.

According to the foregoing design, the user plane network element may set the marking information for the media unit in a plurality of manners.

According to a second aspect, this application provides a media unit transmission method. The method includes: An access network device receives a media unit that carries marking information. The access network device discards the media unit based on the marking information, where the media unit includes at least one data packet, and the marking information is for determining that the media unit is a media unit allowed to be discarded.

According to the foregoing method, the access network device receives the media unit that carries the identification information, and discards the media unit based on the identification information. For example, the access network device determines, based on the marking information, that the media unit is the media unit allowed to be discarded, and the access network device discards the media unit. Therefore, all the data packets included in the media unit can be discarded at a granularity of the media unit, to avoid significant degradation in video quality caused by random discarding of a data packet.

In a possible design, when discarding the media unit based on the marking information, the access network device determines, based on the marking information, that the media unit is a media unit to be preferentially discarded, and the access network device discards the media unit.

According to the foregoing design, the access network device determines, based on the marking information, whether the media unit is the media unit to be preferentially discarded.

In a possible design, the access network device receives, from a session management network element, a parameter for processing a media unit. When discarding the media unit based on the marking information, the access network device discards the media unit based on the marking information and the parameter for processing a media unit. It may be understood that the parameter for processing a media unit may be first sent by the session management network element to an access and mobility management network element, and then sent by the access and mobility management network element to the access network device.

For example, that the access network device discards the media unit based on the marking information and the parameter for processing a media unit may be understood as: The access network device determines that a quantity of discarded media units does not exceed an upper limit value specified by the parameter for processing a media unit, and discards the media unit based on the identification information. Alternatively, when the access network device discards the media unit based on the identification information, the parameter for processing a media unit needs to be satisfied, for example, it needs to be ensured that a quantity of discarded media units does not exceed an upper limit value specified by the parameter for processing a media unit.

According to the foregoing design, the access network device determines, based on the marking information and the parameter for processing a media unit, whether to discard the media unit. This may alternatively be understood as: The access network device discards the media unit based on the marking information and the parameter for processing a media unit. In this way, all the data packets included in the media unit can be discarded at the granularity of the media unit, and a quantity of media units to be discarded may be controlled based on the parameter for processing a media unit.

In a possible design, the marking information indicates that the media unit is the media unit allowed to be discarded.

In a possible design, the access network device receives first configuration information from the session management network element, and discards the media unit based on the first configuration information, where the first configuration information indicates that a media unit corresponding to the marking information is the media unit allowed to be discarded.

According to the foregoing design, the access network device may discard, based on the first configuration information, the media unit that carries the identification information.

In a possible design, the marking information indicates importance information of the media unit. In this case, the identification information may also be referred to as importance marking information, importance level information, priority information, or the like, and importance may also be referred to as a priority. That the marking information is for determining that the media unit is a media unit allowed to be discarded may also be understood as: The marking information is for determining importance of the media unit, and the media unit is discarded based on the importance of the media unit.

In a possible design, when discarding the media unit based on the marking information, the access network device discards the media unit based on the importance information of the media unit.

For example, when the marking information indicates the importance information of the media unit, the access network device determines the importance of the media unit based on the importance information of the media unit, and then discards the media unit based on the importance of the media unit. For example, for a plurality of media units having different importance, a media unit with low importance is preferentially discarded. Alternatively, when the importance of the media unit is lower than preset importance, the access network device discards the media unit.

In a possible design, the access network device receives second configuration information from the session management network element, and discards the media unit based on the second configuration information, where the second configuration information indicates that a media unit with preset importance is the media unit allowed to be discarded.

According to the foregoing design, the access network device may determine, based on the second configuration information, whether to discard the media unit that carries the identification information.

It may be understood that the preset importance may include one or more importance values. The preset importance may be determined by an application function network element or the session management network element.

In a possible design, the marking information indicates type information of the media unit.

In a possible design, when discarding the media unit based on the marking information, the access network device discards the media unit based on the type information of the media unit.

For example, when the marking information indicates the type information of the media unit, the access network device determines a type of the media unit based on the type information of the media unit, and then discards the media unit based on the type of the media unit. For example, for a plurality of media units of different types, a media unit of a specific type is preferentially discarded.

In a possible design, the access network device receives third configuration information from the session management network element, and discards the media unit based on the third configuration information, where the third configuration information indicates that a media unit of a preset type is the media unit allowed to be discarded.

According to the foregoing design, the access network device may determine, based on the third configuration information, whether to discard the media unit that carries the identification information.

It may be understood that the preset type may include one or more types of media units. The preset type may be determined by an application function network element or the session management network element.

In a possible design, the marking information indicates discarding priority information of the media unit. That the marking information is for determining that the media unit is a media unit allowed to be discarded may also be understood as: The marking information is for determining a discarding priority of the media unit.

In a possible design, the access network device determines the discarding priority of the media unit based on the marking information.

In a possible design, when discarding the media unit based on the marking information, the access network device discards the media unit based on the discarding priority information of the media unit.

For example, when the marking information indicates the discarding priority information of the media unit, the access network device determines the discarding priority of the media unit based on the discarding priority information of the media unit, and then discards the media unit based on the discarding priority of the media unit. For example, for a plurality of media units with different discarding priorities, a media unit with a high discarding priority is preferentially discarded.

In a possible design, the access network device receives fourth configuration information from the session management network element, where the fourth configuration information indicates a discarding sequence corresponding to a plurality of discarding priorities.

For example, because the discarding priority may include a plurality of values, for example, the discarding priority includes A, B, C, and D, the fourth configuration information may indicate that the discarding sequence is A, B, C, and D or D, C, B, and A.

According to the foregoing design, the access network device may determine, based on the fourth configuration information, a discarding ranking of the media unit.

In a possible design, the parameter for processing a media unit includes a maximum quantity of discardable media units.

When the access network device discards the media unit based on the identification information and the parameter for processing a media unit, the access network device discards the media unit based on the marking information when a quantity of discarded media units is less than the maximum quantity.

For example, when determining that the quantity of discarded media units is less than the maximum quantity, the access network device discards the media unit based on the identification information. This is alternatively understood as: The access network device determines that the quantity of discarded media units is less than the maximum quantity, and discards the media unit based on the identification information.

In a possible design, the maximum quantity of discardable media units is a maximum quantity of discardable media units in a media unit group. The access network device determines that the media unit carries an identifier of the media unit group, and determines that the media unit belongs to the media unit group.

According to the foregoing design, when the access network device discards the media unit based on the identification information and the parameter for processing a media unit, the access network device determines whether a quantity of discarded media units in the media unit group to which the media unit belongs is less than the maximum quantity of discardable media units in the media unit group; and if yes, discards the media unit based on the marking information. For example, the access network device determines that the quantity of discarded media units in the media unit group to which the media unit belongs is less than the maximum quantity, and discards the media unit based on the identification information. Alternatively, the access network device discards the media unit based on the identification information when determining that the quantity of discarded media units is less than the maximum quantity. In this way, the quantity of media units to be discarded may be adjusted and controlled.

In a possible design, the maximum quantity of discardable media units is a maximum quantity of discardable media units in a time window. The access network device determines that the media unit is located in the time window.

According to the foregoing design, when the access network device discards the media unit based on the identification information and the parameter for processing a media unit, the access network device determines whether a quantity of discarded media units in the time window in which the media unit is located is less than the maximum quantity of discardable media units in the time window; and if yes, discards the media unit based on the marking information. For example, the access network device determines that the quantity of discarded media units in the time window in which the media unit is located is less than the maximum quantity, and discards the media unit based on the identification information. Alternatively, the access network device discards the media unit based on the identification information when determining that the quantity of discarded media units in the time window in which the media unit to be discarded is located is less than the maximum quantity. In this way, the quantity of media units to be discarded may be adjusted and controlled.

In a possible design, the parameter for processing a media unit includes a maximum ratio of discardable media units. When the access network device discards the media unit based on the identification information and the parameter for processing a media unit, the access network device discards the media unit based on the marking information when a ratio of discarded media units is less than the maximum ratio.

For example, the access network device determines that the ratio of discarded media units is less than the maximum ratio, and discards the media unit based on the identification information.

In a possible design, the maximum ratio of discardable media units is a maximum ratio of discardable media units in a media unit group. The access network device determines that the media unit carries an identifier of the media unit group, and determines that the media unit belongs to the media unit group.

According to the foregoing design, when the access network device discards the media unit based on the parameter for processing a media unit, the access network device determines whether a ratio of discarded media units in the media unit group to which the media unit belongs is less than the maximum ratio of discardable media units in the media unit group; and if yes, discards the media unit. For example, the access network device determines that the ratio of discarded media units in the media unit group to which the media unit belongs is less than the maximum ratio, and discards the media unit based on the identification information. In this way, a maximum ratio of media units to be discarded may be adjusted and controlled.

In a possible design, the maximum ratio of discardable media units is a maximum ratio of discardable media units in a time window. The access network device determines that the media unit is located in the time window.

According to the foregoing design, when the access network device discards the media unit based on the parameter for processing a media unit, the access network device determines whether a ratio of discarded media units in the time window in which the media unit is located is less than the maximum ratio of discardable media units in the time window; and if yes, discards the media unit. For example, the access network device determines that the ratio of discarded media units in the time window in which the media unit is located is less than the maximum ratio, and discards the media unit based on the identification information. In this way, a maximum ratio of media units to be discarded may be adjusted and controlled.

In a possible design, when receiving the media unit, the access network device receives a data packet that carries an identifier of the media unit, and determines that the data packet that carries the identifier of the media unit belongs to the media unit.

According to the foregoing design, the access network device may identify which data packets belong to one media unit.

According to the foregoing design, all the data packets included in the media unit can be discarded at the granularity of the media unit, to avoid the significant degradation in the video quality caused by the random discarding of the data packet.

In a possible design, the marking information is the identifier of the media unit, and that the access network device discards the media unit based on the identifier of the media unit may be understood as: The access network device discards data packets having the same identifier of the media unit, or the access network device discards a media unit indicated by the identifier of the media unit. In this case, it may be considered that the identifier of the media unit implicitly carries the marking information. Alternatively, this may be understood as: A media unit that carries the identifier of the media unit is the media unit allowed to be discarded. That the marking information is for determining that the media unit is a media unit allowed to be discarded may be understood as: The media unit that carries the identifier of the media unit is a discardable media unit, or the media unit is discarded based on the identifier of the media unit. Therefore, the access network device may discard the media unit based on the identifier of the media unit, to discard, at the granularity of the media unit, all the data packets included in the media unit.

According to a third aspect, this application provides a media unit transmission method. The method includes: A policy control network element obtains a parameter for processing a media unit. The policy control network element generates a policy and charging control rule based on the parameter for processing a media unit, where the policy and charging control rule indicates the parameter for processing a media unit. The policy control network element sends the policy and charging control rule to a session management network element. In addition/Alternatively, the policy control network element obtains information for determining a media unit allowed to be discarded. The policy control network element generates a policy and charging control rule based on the information for determining the media unit allowed to be discarded, where the policy and charging control rule indicates the information for determining the media unit allowed to be discarded. The policy control network element sends the policy and charging control rule to the session management network element.

According to the foregoing design, the policy control network element may send, to the session management network element by using the policy and charging control rule, the parameter for processing a media unit and/or the information for determining the media unit allowed to be discarded.

In a possible design, the parameter for processing a media unit includes a maximum quantity of discardable media units or a maximum ratio of discardable media units.

In a possible design, the maximum quantity of discardable media units is a maximum quantity of discardable media units in a media unit group, or is a maximum quantity of discardable media units in a time window.

In a possible design, the maximum ratio of discardable media units is a maximum ratio of discardable media units in a media unit group, or is a maximum ratio of discardable media units in a time window.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

According to a fourth aspect, this application provides a media unit transmission method. The method includes: A session management network element obtains a parameter for processing a media unit, and sends, to an access network device, the parameter for processing a media unit. In addition/Alternatively, the session management network element obtains information for determining a media unit allowed to be discarded, and sends, to a user plane network element, the information for determining the media unit allowed to be discarded.

According to the foregoing design, the session management network element may obtain the parameter for processing a media unit, and send the parameter to the access network device; and/or obtain the information for determining the media unit allowed to be discarded, and send the information to the user plane network element.

In a possible design, the session management network element receives the policy and charging control rule from a policy control network element, where the policy and charging control rule indicates the parameter for processing a media unit.

In a possible design, the session management network element receives the policy and charging control rule from the policy control network element, where the policy and charging control rule indicates the information for determining the media unit allowed to be discarded.

According to the foregoing design, the policy control network element may notify, by using the policy and charging control rule, the session management network element of the parameter for processing a media unit and/or the information for determining the media unit allowed to be discarded.

In a possible design, the parameter for processing a media unit includes a maximum quantity of discardable media units or a maximum ratio of discardable media units.

In a possible design, the maximum quantity of discardable media units is a maximum quantity of discardable media units in a media unit group, or is a maximum quantity of discardable media units in a time window.

In a possible design, the maximum ratio of discardable media units is a maximum ratio of discardable media units in a media unit group, or is a maximum ratio of discardable media units in a time window.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

In a possible design, the session management network element sends first indication information to the user plane network element, where the first indication information indicates to set marking information for a received media unit, and the marking information is for determining that the received media unit is the media unit allowed to be discarded. This may also be understood as: The marking information is for determining that the media unit is a media unit to be preferentially discarded, or the marking information is for determining to discard the media unit.

In a possible design, the marking information indicates that the media unit is the media unit allowed to be discarded.

In a possible design, the session management network element sends first configuration information to the access network device, where the first configuration information indicates that a media unit corresponding to the marking information is the media unit allowed to be discarded.

In a possible design, the marking information indicates importance information of the media unit.

In a possible design, the session management network element sends second configuration information to the access network device, where the second configuration information indicates that a media unit at a preset importance level is the media unit allowed to be discarded.

In a possible design, the marking information indicates type information of the media unit.

In a possible design, the session management network element sends third configuration information to the access network device, where the third configuration information indicates that a media unit of a preset type is the media unit allowed to be discarded.

In a possible design, the marking information indicates discarding priority information of the media unit.

In a possible design, the session management network element sends fourth configuration information to the access network device, where the fourth configuration information indicates a discarding sequence corresponding to a plurality of discarding priorities.

In a possible design, the session management network element sends second indication information to the user plane network element, where the second indication information indicates the user plane network element to set a same identifier of a media unit for data packets that belong to the same media unit.

In a possible design, the session management network element sends third indication information to the user plane network element, where the third indication information indicates to set a same identifier of a media unit group for media units that belong to the same media unit group.

According to a fifth aspect, this application further provides an apparatus. The apparatus may perform the foregoing method design. The apparatus may be a chip or a circuit that can perform a function corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is the chip or the circuit, the communication interface may be an input/output interface of the chip, for example, an input/output pin.

In a possible design, the apparatus includes corresponding functional units, respectively configured to implement the steps in the foregoing method. The function may be implemented by hardware, or may be implemented by executing corresponding software by hardware. The hardware or the software includes one or more units that correspond to the foregoing functions.

According to a sixth aspect, this application provides a computer-readable storage medium, where the computer-readable storage medium stores a computer program; and when the computer program is run on an apparatus, the method in any one of the foregoing possible designs is performed.

According to a seventh aspect, this application provides a computer program product, where the computer program product includes a computer program; and when the computer program is run on an apparatus, the method in any one of the foregoing possible designs is performed.

According to an eighth aspect, this application provides a communication system. The communication system includes a user plane network element and an access network device, where the user plane network element is configured to implement any possible design of the first aspect, and the access network device is configured to implement any possible design of the second aspect.

In a possible design, the communication system further includes a session management network element, where the session management network element is configured to implement any possible design of the fourth aspect.

In a possible design, the communication system further includes a policy control network element, where the policy control network element is configured to implement any possible design of the third aspect.

### BRIEF DESCRIPTION OF DRAWINGS

FIG. 1 is a schematic diagram of an architecture of a mobile communication system to which this application is applied;
FIG. 2 is a schematic diagram of a network exposure architecture to which this application is applied;
FIG. 3 is a schematic diagram of a structure of a GOP to which this application is applied;
FIG. 4 is an overview flowchart of a media unit transmission method according to this application;
FIG. 5 is a schematic diagram of an interaction process between a policy control network element and a session management network element and a process in which the session management network element configures a user plane network element and an access network device according to this application;
FIG. 6 is a first specific flowchart of media unit transmission according to this application;
FIG. 7 is a second specific flowchart of media unit transmission according to this application;
FIG. 8 is a third specific flowchart of media unit transmission according to this application;
FIG. 9 is a fourth specific flowchart of media unit transmission according to this application;
FIG. 10 is a first schematic diagram of a structure of an apparatus according to this application; and
FIG. 11 is a second schematic diagram of a structure of an apparatus according to this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in appropriate circumstances, and are merely a discrimination manner that is used when objects having a same attribute are described in embodiments of this application. In addition, the terms "include", "contain" and any other variants mean to cover non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

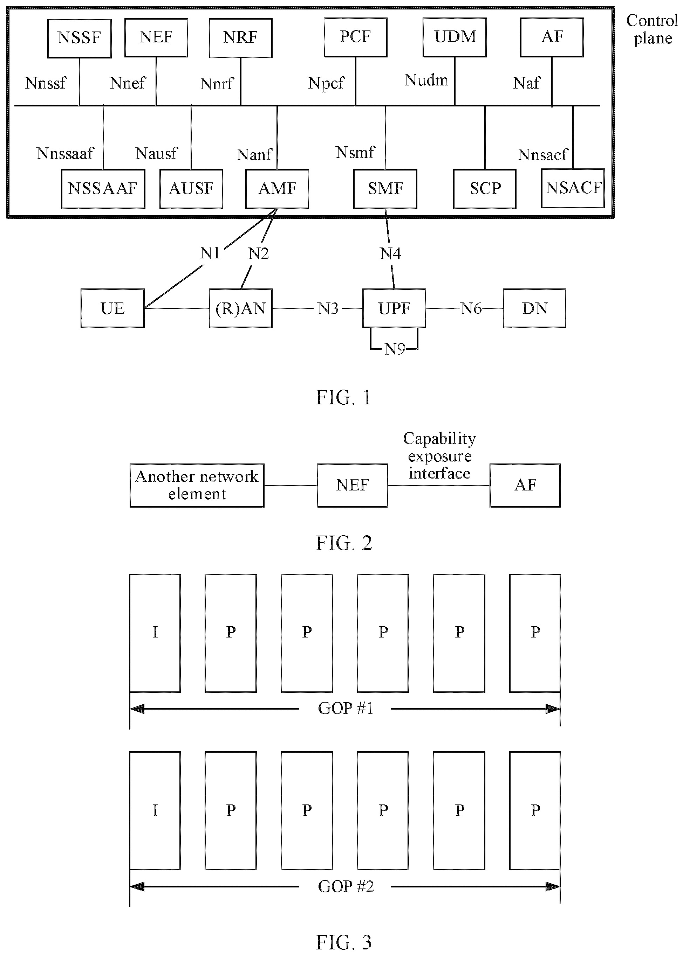

FIG. 1 is a schematic diagram of an architecture of a 5G network. The following briefly describes functions of some devices in FIG. 1.

A terminal device is an entry for a mobile user to interact with the network, and can provide a basic computing capability and a storage capability, display a service window to the user, and receive an operation input from the user. A next-generation terminal device (NextGen UE) may establish a signal connection and a data connection to a RAN by using a new radio technology, to transmit a control signal and service data to the mobile network. The terminal device may include various handheld devices, vehicle-mounted devices, wearable devices, and computing devices that have a wireless communication function or another processing device connected to a wireless modem, and various forms of terminals, such as a mobile station (mobile station, MS), a terminal (terminal), and a soft terminal, for example, a water meter, an electricity meter, and a sensor.

An access network (access network, AN) device or a radio access network (radio access network, RAN) device is deployed near the terminal device, provides a network access function for an authorized user in a specific area, and can determine transmission tunnels of different quality based on a user level, a service requirement, and the like to transmit user data. The RAN can manage and appropriately use resources of the RAN, and provide an access service for the terminal device as required, and is responsible for forwarding a control signal and user data between the terminal device and a core network.

A data network (data network, DN) provides a service for the user. Generally, a client is on the terminal device, and a server is on the data network. The data network may be a private network, for example, a local area network; may be an external network that is not controlled by an operator, for example, the Internet (Internet); or may be a dedicated network jointly deployed by operators, for example, a network that provides an IP multimedia network subsystem (IP multimedia network subsystem, IMS) service.

A user plane of the core network includes a user plane function (user plane function, UPF). A control plane of the core network includes an access and mobility management function (access and mobility management function, AMF), a session management function (session management function, SMF), a unified data management (unified data management, UDM), a policy control function (policy control function, PCF), an application function (application function, AF), an authentication server function (authentication server function, AUSF), a network slice selection function (network slice selection function, NSSF), a network slice-specific authentication and authorization function (network slice-specific authentication and authorization function, NSSAAF), a network exposure function (network exposure function, NEF), and the like.

The control plane of the core network uses a service-oriented architecture. A point-to-point communication mode in a traditional architecture is replaced with a service calling mode for interaction between the control plane network elements. In the service-oriented architecture, a control plane network element exposes a service to another control plane network element, so that the another control plane network element calls the service. In point-to-point communication, a communication interface between control plane network elements stores a set of specific messages, and the messages can be used only by the control plane network elements at two ends of the interface during communication.

The following briefly describes functions of functional entities in the core network.
1. A session management network element is mainly for session management, allocation and management of an IP address of the terminal device, selection of a manageable user equipment plane function, termination of interfaces towards a policy control function or a charging function, downlink data notification, and the like. In 5G communication, the session management network element may be an SMF network element. In future communication such as 6G communication, the session management function network element may still be the SMF network element or have another name. This is not limited in this application. Nsmf is a service-oriented interface provided by the SMF. The SMF may communicate with another network function through Nsmf.
2. An access management network element (also referred to as an access and mobility management network element) is mainly for mobility management, access management, and the like, and may be, for example, a mobility management entity (mobility management entity, MME) function in a 4G communication network or an AMF network element in a 5G network. In the future communication such as the 6G communication, the access management network element may still be the AMF network element or have another name. This is not limited in this application. Namf is a service-oriented interface provided by the AMF. The AMF may communicate with another network function through Namf.
3. A policy control network element is for a unified policy framework to govern network behavior, providing of policy rule information for a control plane function network element (for example, the AMF or the SMF), and the like. In the 5G communication, the policy control network element may be a PCF network element. In the future communication such as the 6G communication, the policy control network element may still be the PCF network element or have another name. This is not limited in this application. Npcf is a service-oriented interface provided by the PCF. The PCF may communicate with another network function through Npcf.
4. A data management network element is for user identifier handling, subscription, access authentication, registration, mobility management, or the like. In the 5G communication, the data management network element may be a UDM network element. In the future communication such as the 6G communication, the data management network element may still be the UDM network element or have another name. This is not limited in this application. Nudm is a service-oriented interface provided by the UDM. The UDM may communicate with another network function through Nudm.
5. An application network element is for application influence on traffic routing, access to the network exposure function, interaction with a policy framework to perform policy control, or the like. In the 5G communication, the application network element may be an AF network element. In the future communication such as the 6G communication, the application network element may still be the AF network element or have another name. This is not limited in this application. Naf is a service-oriented interface provided by the AF. The AF may communicate with another network function through Naf.
6. A user plane network element is for packet routing and forwarding, quality of service (quality of service, QoS) handling for user plane data, or the like. In the 5G communication, the user plane network element may be a user plane function (user plane function, UPF) network element. In the future communication such as the 6G communication, the user plane network element may still be the UPF network element or have another name. This is not limited in this application.
7. An authentication server network element is mainly for user authentication and the like. In the 5G communication, the authentication server network element may be an AUSF network element. In the future communication such as the 6G communication, the authentication server network element may still be the AUSF network element or have another name. This is not limited in this application. Nausf is a service-oriented interface provided by the AUSF. The AUSF may communicate with another network function through Nausf.
8. A network slice selection function network element is configured to select a network slice for the terminal device. In the 5G communication, the network slice selection function network element may be an NSSF network element. In the future communication such as the 6G communication, the network slice selection function network element may still be the NSSF network element or have another name. This is not limited in this application.
9. A network exposure network element is configured to provide some network-related status information for an application service. In the 5G communication, the network exposure network element may be a NEF network element. In the future communication such as the 6G communication, the network exposure network element may still be the NEF network element or have another name. This is not limited in this application.

5G network capability exposure means exposing some capabilities of the 5G network to a third-party application through an application programming interface (application programming interface, API). The third-party application can control some behaviors of the 5G network and the terminal device. The capability of the 5G network is exposed to a third party through the NEF. The third party calls, through the AF, the API provided by the 5G network. A basic network exposure architecture is shown in FIG. 2.

It may be understood that the core network may further include another network element. This is not limited in this application.

The technical solutions provided in embodiments of this application can be applied to various communication systems. For example, the technical solutions can be applied to an LTE system or a 5G system, and can also be applied to another future-oriented new system, for example, a 6G system. This is not specifically limited in embodiments of this application. In addition, the terms "system" and "network" may be interchangeably used.

For ease of understanding of embodiments of this application, several basic concepts in embodiments of this application are briefly described.

### 1. Video stream

The video stream is encoded into a series of data frames, and the data frames may include three types: an I-frame, a P-frame, and a B-frame. The I-frame contains complete image information and can be decoded independently without depending on another frame. The P-frame needs to be decoded by using a previous I-frame or P-frame of the P-frame as a reference frame. The B-frame needs to be decoded by using previous and following I-frames or P-frames of the B-frame as reference frames.

### 2. Group of pictures (group of pictures, GOP)

The group of pictures (group of pictures, GOP) is a group of successive pictures, including one I-frame and a plurality of B-frames or P-frames. A video stream in one GOP can be decoded independently. Generally, there is no decoding dependency between GOPs. For example, a structure of the GOP is shown in FIG. 3.

One data frame usually includes a plurality of data packets. On a decoder side, when a part of data packets in one data frame are lost, screen blurring occurs, and video quality deteriorates. However, in some scenarios, a user is unaware of discarding of a small quantity of data frames, in other words, video quality does not deteriorate significantly. For example, a typical frame rate of a real-time virtual reality (virtual reality, VR) video stream is usually 30 FPS to 120 FPS. For this type of service, a user is not sensitive to discarding of a small quantity of data frames.

Based on this, an embodiment of this application provides a media unit transmission method, to resolve a problem that data in a plurality of data frames is incomplete because data packets are randomly discarded. In the foregoing method, a user plane network element receives a media unit, and sets marking information for the received media unit. The user plane network element sends the media unit that carries the marking information. After receiving the media unit that carries the marking information, an access network device may discard the media unit based on the marking information. According to the foregoing method, all data packets included in the media unit can be discarded at a granularity of the media unit, to avoid significant degradation in video quality caused by random discarding of a data packet. This ensures user experience.

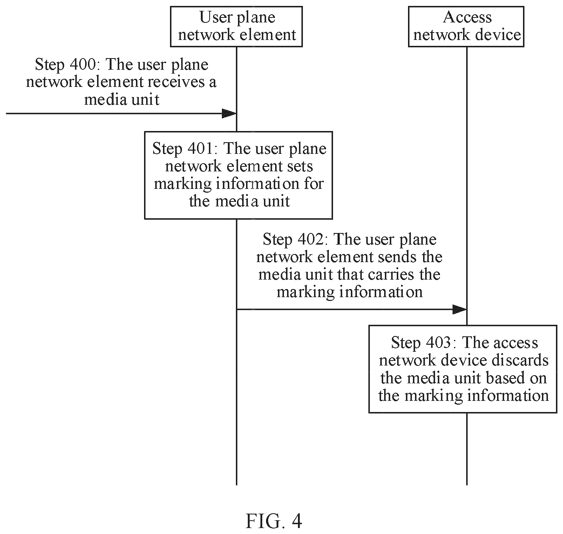

As shown in FIG. 4, the method includes the following steps.

Step 400: The user plane network element receives the media unit, where the media unit includes a plurality of data packets.

The media unit (media unit, MU) represents a unit whose packets are considered to be all discarded. One media unit may include a plurality of data packets. When one media unit is discarded, all data packets included in the media unit are discarded. For example, the media unit may be a data frame or another unit including a plurality of data packets.

In this application, the media unit includes one or more protocol data units (where the protocol data unit may also be referred to as the data packet), and may also be referred to as a protocol data unit set (PDU Set). Generally, the protocol data units included in the media unit have a same importance requirement. A media unit group includes one or more media units, and may also be referred to as a group of protocol data unit sets (Group of PDU Sets).

For example, the user plane network element receives a service data flow from an application server, where the service data flow includes a plurality of media units.

It may be understood that the user plane network element may identify a media unit based on information carried in the service data flow from the application server. A data packet in the service data flow carries boundary information between media units. The user plane network element may determine, based on the boundary information, a media unit to which the data packet belongs. Alternatively, the user plane network element identifies a media unit based on traffic characteristic information of the service data flow. For example, when a rate of the service data flow is greater than a preset threshold at a specific moment, a media unit corresponding to the specific moment may be determined as an I-frame; or when a rate of the service data flow at a specific moment is less than a preset threshold, a media unit corresponding to the specific moment may be determined as a P-frame. In addition, there is an interval between adjacent media units, in other words, after sending of data packets included in one media unit is complete, data packets included in another media unit are sent at an interval of a period of time, so that the media unit can be identified. It should be noted that the foregoing methods for identifying the media unit by the user plane network element are merely examples, and are not intended to limit this application.

Step 401: The user plane network element sets the marking information for the media unit, where the marking information is for determining that the media unit is a media unit allowed to be discarded.

In this application, that the marking information is for determining that the media unit is a media unit allowed to be discarded may also be understood as: The marking information is for determining that the media unit is a media unit that can be preferentially discarded, or the marking information is for determining to discard the media unit.

In a possible implementation, the user plane network element may receive first indication information from a session management network element, where the first indication information indicates to set the marking information for the received media unit. The first indication information herein may be explicitly expressed, in other words, the first indication information is explicitly carried in a message. Alternatively, the first indication information may be implicitly expressed. For example, the first indication information is not carried in a message, and content intended to be expressed by the first indication information is implicitly expressed by another information element, for example, is implicitly indicated by using a name of the another information element. However, when receiving the information element, the user plane network element understands that the marking information needs to be set for the received media unit. It may be understood that the user plane network element may set marking information for all received media units, or may set marking information for a part of received media unit devices. When setting marking information for two different media units, the user plane network element may set marking information with same content or marking information with different content for the two user plane network elements. In this application, that the user plane network element sets the marking information for the media unit may be specifically understood as: The user plane network element sets the marking information for a data packet in the media unit. The following provides descriptions with reference to several possible scenarios in which the user plane network element sets the marking information for the media unit.

Scenario 1: The marking information indicates that the media unit is the media unit allowed to be discarded or is a media unit not allowed to be discarded.

For example, when the media unit is the media unit allowed to be discarded, the user plane network element sets the marking information for the media unit. In this case, the marking information indicates that the media unit is the media unit allowed to be discarded, and the marking information in this case may also be referred to as discarding-allowed marking information.

Alternatively, when the media unit is the media unit not allowed to be discarded, the user plane network element sets the marking information for the media unit. In this case, the marking information indicates that the media unit is the media unit not allowed to be discarded, and the marking information in this case may also be referred to as discarding-not-allowed marking information.

Therefore, in the scenario 1, the user plane network element sets the marking information for a part of received media units.

For example, the user plane network element receives a media unit A, a media unit B, and a media unit C. The media unit A and the media unit C are media units allowed to be discarded, and the media unit B is a media unit not allowed to be discarded. In this case, the user plane network element sets marking information for the media unit A and the media unit C, and does not set marking information for the media unit B. In this case, content of the marking information that is set by the user plane network element for the media unit A may be the same as content of the marking information that is set by the user plane network element for the media unit C, and the marking information in this case may also be referred to as the discarding-allowed marking information.

Alternatively, the user plane network element sets marking information for the media unit B, and does not set marking information for the media unit A and the media unit C. The marking information in this case may also be referred to as the discarding-not-allowed marking information.

For example, the user plane network element may receive, from the session management network element or the application server, information for determining the media unit allowed to be discarded. Further, the user plane network element may determine, based on the information for determining the media unit allowed to be discarded, whether the received media unit is the media unit allowed to be discarded, and set the marking information for the media unit that is determined as the media unit allowed to be discarded. For example, when the information for determining the media unit allowed to be discarded is from the session management network element, when receiving a media unit indicated by the information for determining the media unit allowed to be discarded, the user plane network element adds the marking information to the media unit. Alternatively, when the information for determining the media unit allowed to be discarded is carried in the service data flow sent by the application server, if the user plane network element detects that a data packet in the service data flow carries the information for determining the media unit allowed to be discarded, the user plane network element sets the marking information for a media unit to which the data packet belongs.

The information for determining the media unit allowed to be discarded includes at least one of type information of the media unit allowed to be discarded, location information of the media unit allowed to be discarded, a sequence number of the media unit allowed to be discarded, or media unit discarding allowance indication information.

For example, the type information of the media unit allowed to be discarded may indicate the P-frame or a B-frame.

It may be understood that a user plane may determine a type of the media unit in a plurality of manners. For example, if a data packet in the service data flow carries type information of a media unit, the user plane network element may determine a type of the media unit based on the type information of the media unit. Alternatively, the user plane network element determines the type of the media unit based on the traffic characteristic information of the service data flow. For example, when a rate of the service data flow is greater than the preset threshold at a specific moment, a media unit corresponding to the specific moment may be determined as the I-frame; or when a rate of the service data flow is less than the preset threshold at a specific moment, a media unit corresponding to the specific moment may be determined as the P-frame. It should be noted that the foregoing methods for determining the type of the media unit by the user plane network element are merely examples, and are not intended to limit this application.

For another example, the location information of the media unit allowed to be discarded may indicate location information of last N data frames of each GOP or location information relative to a first data frame or a last data frame in the GOP.

For example, the user plane network element may identify the GOP in a plurality of manners. For example, if a data packet in the service data flow carries type information of a media unit, the user plane network element may determine a location of the I-frame based on the type information of the media unit, use the I-frame as a start data frame of the GOP, and use a data frame previous to a next I-frame as an end data frame of the GOP. Alternatively, a data packet in the service data flow carries boundary information of the GOP. The user plane network element may identify the GOP based on the boundary information of the GOP. Alternatively, a data packet in the service data flow carries indication information, for example, a GOP ID, of the GOP, and the user plane network element may identify the GOP based on the indication information. Further, the user plane network element determines a data frame that is in each GOP and that is allowed to be discarded.

For another example, the sequence number of the media unit allowed to be discarded may be a sequence number of a data frame or a frame number relative to each I-frame.

In a possible implementation, the session management network element sends an N4 rule to the user plane network element, where the N4 rule may include at least one of the type information of the media unit allowed to be discarded, the location information of the media unit allowed to be discarded, or the sequence number of the media unit allowed to be discarded.

For another example, the media unit discarding allowance indication information may indicate whether the received media unit is allowed to be discarded. In a possible implementation, the media unit discarding allowance indication information may be carried in the service data flow, to be specific, the media unit discarding allowance indication information is carried in a data packet in the service data flow.

Scenario 2: The marking information indicates importance information of the media unit.

It may be understood that importance of different media units may be the same or may be different. The importance may include a plurality of values. In this case, the identification information may also be referred to as importance marking information, priority information, or the like. The importance may also be referred to as a priority or an importance level. That the marking information is for determining that the media unit is a media unit allowed to be discarded may also be understood as: The marking information is for determining importance of the media unit, and the media unit is discarded based on the importance of the media unit.

For example, the user plane network element determines the importance of the received media unit, and then sets corresponding marking information for the media unit based on the importance of the media unit. In this case, the user plane network element may set corresponding marking information for all received media units.

Alternatively, the user plane network element determines the importance of the received media unit, then determines whether the importance of the media unit meets a preset importance condition, and sets corresponding marking information for the media unit when determining that the preset importance condition is met; otherwise, the user plane network element may not set marking information for the media unit. In this case, the user plane network element may set corresponding marking information for a part of received media units. It may be understood that because the importance may include the plurality of values, for example, the preset importance condition may be represented as being lower than a specific importance value, or the preset importance condition includes one or more importance values. The preset importance condition may be determined by an application function network element, the session management network element, or the like.

In a possible design, the user plane network element determines the importance information of the media unit based on a type of the media unit.

For example, the user plane network element may determine the type (for example, the I-frame, the P-frame, or a B-frame) of the media unit, and then determine the importance information of the media unit based on the type of the media unit. For example, importance corresponding to the P-frame or the B-frame is low importance, and importance corresponding to the I-frame is high importance, in other words, importance of the I-frame is higher than importance of the P-frame and the B-frame.

In a possible design, the session management network element sends, to the user plane network element, information for determining importance. The information for determining importance may include at least one of a correspondence between importance and a type of a media unit, a correspondence between importance and a location of a media unit, or a correspondence between importance and a sequence number of a media unit. For example, the user plane network element may determine the type (for example, the I-frame, the P-frame, or the B-frame) of the media unit, and then determine the importance of the media unit based on the type of the media unit and the correspondence between importance and a type of a media unit.

In addition, it may be understood that the user plane network element may alternatively determine the importance of the media unit based on other information. For example, a data packet in the service data flow carries importance information, and the user plane network element adds, based on the importance information carried in the data packet in the service data flow, marking information to a media unit to which the data packet belongs.

The marking information may directly include the importance (for example, at a first level, a second level, or a third level) of the media unit, or include corresponding information of the importance of the media unit. For example, the first level, the second level, and the third level respectively correspond to marks X, Y, and Z. For another example, the marking information occupies 2 bits, where a value "00" of the marking information indicates that the importance of the media unit is at the first level, a value "01" of the marking information indicates that the importance of the media unit is at the second level, and a value "10" of the marking information indicates that the importance of the media unit is at the third level.

For example, the importance corresponding to the I-frame is at the first level, and the importance corresponding to the P-frame or the B-frame is at the second level. The user plane network element receives a media unit A, a media unit B, and a media unit C. A type of the media unit A and a type of the media unit C are the B-frame, and a type of the media unit B is the I-frame. In this case, the user plane network element sets marking information for the media unit A and the media unit C. The marking information indicates that the importance of the media unit is at the second level. In this case, content of the marking information that is set by the user plane network element for the media unit A is the same as content of the marking information that is set by the user plane network element for the media unit C. The user plane network element sets marking information for the media unit B, where the marking information indicates that the importance of the media unit is at the first level. The content of the marking information that is set by the user plane network element for the media unit A is different from content of the marking information that is set by the user plane network element for the media unit B.

For another example, the importance corresponding to the I-frame is at the first level, and the importance corresponding to the P-frame or the B-frame is at the second level. The user plane network element receives a media unit A, a media unit B, and a media unit C. A type of the media unit A and a type of the media unit C are the B-frame, a type of the media unit B is the I-frame, and the preset importance condition indicates to set marking information for a media unit whose importance is at the first level. In this case, the user plane network element does not set marking information for the media unit A and the media unit C, but sets marking information for only the media unit B, where the marking information indicates that the importance of the media unit is at the first level.

Scenario 3: The marking information indicates type information of the media unit.

For example, the user plane network element determines a type of the received media unit, and then sets corresponding marking information for the media unit based on the type of the media unit. In this case, the user plane network element may set corresponding marking information for all received media units. In this case, the identification information may also be referred to as frame type marking information.

Alternatively, the user plane network element determines a type of the received media unit, then determines whether the type of the media unit meets a preset type condition, and sets corresponding marking information for the media unit when determining that the preset type condition is met; otherwise, the user plane network element may not set marking information for the media unit. In this case, the user plane network element may set corresponding marking information for a part of received media units. It may be understood that because there may be a plurality of types of media units, for example, the preset type condition may indicate at least one type of media unit. The preset type condition may be determined by the application function network element, the session management network element, or the like.

The marking information may directly include the type information (for example, the I-frame, the P-frame, or a B-frame) of the media unit, or include corresponding information of the type of the media unit. For example, the I-frame, the P-frame, and the B-frame respectively correspond to marks X, Y, and Z. For another example, the marking information occupies 2 bits, where a value "00" of the marking information indicates that the type of the media unit is the I-frame, a value "01" of the marking information indicates that the type of the media unit is the B-frame, and a value "10" of the marking information indicates that the type of the media unit is the P-frame.

In a possible design, the session management network element sends, to the user plane network element, information indicating the user plane network element to mark the received media unit with a corresponding type of the media unit. The session management network element sends an N4 rule to the user plane network element, where the N4 rule includes the information indicating the user plane network element to mark the received media unit with the corresponding type of the media unit.

For example, the user plane network element receives a media unit A, a media unit B, and a media unit C. A type of the media unit A and a type of the media unit C are the B-frame, and a type of the media unit B is the I-frame. In this case, the user plane network element sets marking information for the media unit A and the media unit C, where the marking information indicates that the type of the media unit is the B-frame. In this case, content of the marking information that is set by the user plane network element for the media unit A is the same as content of the marking information that is set by the user plane network element for the media unit C. The user plane network element sets marking information for the media unit B, where the marking information indicates that the type of the media unit is the I-frame. The content of the marking information that is set by the user plane network element for the media unit A is different from content of the marking information that is set by the user plane network element for the media unit B.

For another example, the user plane network element receives a media unit A, a media unit B, and a media unit C. A type of the media unit A is the B-frame, a type of the media unit C is the P-frame, a type of the media unit B is the I-frame, and the preset type condition indicates to set marking information for a media unit whose type is the B-frame or the P-frame. In this case, the user plane network element sets marking information for the media unit A, where the marking information indicates that the type of the media unit is the B-frame. The user plane network element sets marking information for the media unit C, where the marking information indicates that the type of the media unit is the P-frame. In addition, the user plane network element does not set marking information for the media unit B.

Scenario 4: The marking information indicates discarding priority information of the media unit.

It may be understood that discarding priorities of different media units may be the same or may be different. The discarding priority may include a plurality of values. In this case, the identification information may also be referred to as discarding priority information, and the discarding priority may also be referred to as the discarding priority information.

For example, the user plane network element determines a discarding priority of the received media unit, and then sets corresponding marking information for the media unit based on the discarding priority of the media unit. In this case, the user plane network element may set corresponding marking information for all received media units.

The marking information may directly include the discarding priority (for example, a discarding priority I, a discarding priority II, and a discarding priority III) of the media unit, or include corresponding information of the discarding priority of the media unit. For example, the discarding priority I, the discarding priority II, and the discarding priority III respectively correspond to marks X, Y, and Z. For another example, the marking information occupies 2 bits, where a value "00" of the marking information indicates that the discarding priority of the media unit is the discarding priority I, a value "01" of the marking information indicates that the discarding priority of the media unit is the discarding priority II, and a value "10" of the marking information indicates that the discarding priority of the media unit is the discarding priority III.

In a possible design, the user plane network element determines the discarding priority of the media unit based on type information of the media unit.

For example, the user plane network element may determine a type (for example, the I-frame, the P-frame, or a B-frame) of the media unit, and then determine the discarding priority of the media unit based on the type of the media unit. For example, a discarding priority corresponding to the P-frame or the B-frame is the discarding priority I, and a discarding priority corresponding to the I-frame is the discarding priority II. The discarding priority I is higher than the discarding priority II, in other words, a media unit corresponding to the discarding priority I is discarded earlier than a media unit corresponding to the discarding priority II.

In a possible design, the session management network element sends, to the user plane network element, information for determining a discarding allowance priority. The information for determining a discarding allowance priority includes at least one of a correspondence between a discarding allowance priority and a type of a media unit, a correspondence between a discarding allowance priority and a location of a media unit, or a correspondence between a discarding allowance priority and a sequence number of a media unit. For example, the user plane network element may determine the type (for example, the I-frame, the P-frame, or the B-frame) of the media unit, and then determine the discarding priority of the media unit based on the type of the media unit and the correspondence between a discarding priority and a type of a media unit. In addition, it may be understood that the user plane network element may alternatively determine the discarding priority of the media unit based on other information. For example, a data packet in the service data flow carries discarding priority information, and the user plane network element adds, based on the discarding priority information carried in the data packet in the service data flow, marking information to a media unit to which the data packet belongs.

For example, the discarding priority corresponding to the P-frame or the B-frame is the discarding priority I, and the discarding priority corresponding to the I-frame is the discarding priority II. The discarding priority I is higher than the discarding priority II, in other words, the media unit corresponding to the discarding priority I is discarded earlier than the media unit corresponding to the discarding priority II. The user plane network element receives a media unit A, a media unit B, and a media unit C. A type of the media unit A and a type of the media unit C are the B-frame, and a type of the media unit B is the I-frame. In this case, the user plane network element sets marking information for the media unit A and the media unit C, where the marking information indicates that the discarding priority of the media unit is the discarding priority I. In this case, content of the marking information that is set by the user plane network element for the media unit A is the same as content of the marking information that is set by the user plane network element for the media unit C. The user plane network element sets marking information for the media unit B, where the marking information indicates that the discarding priority of the media unit is the discarding priority II. The content of the marking information that is set by the user plane network element for the media unit A is different from content of the marking information that is set by the user plane network element for the media unit B.

Based on the foregoing four possible scenarios, the user plane network element may set the marking information for all or a part of the media units, so that the access network device discards the media unit based on the marking information.

For example, a manner of setting the marking information for the media unit by the user plane network element may include but is not limited to the following manners.

Manner 1: The user plane network element may set the marking information for a part of the data packets in the media unit. For example, the user plane network element sets the marking information for a first data packet in the media unit, or the user plane network element sets the marking information for a last data packet in the media unit.

Manner 2: The user plane network element separately sets the marking information for all the data packets in the media unit.

For example, that the user plane network element sets marking information for a data packet means setting corresponding marking information in a header of a general packet radio service (general packet radio service, GPRS) tunneling protocol for the user plane (GPRS tunneling protocol for the user plane, GTP-U) protocol corresponding to the data packet.

It should be noted that, in some scenarios, the access network device may not be capable of identifying which data packets belong to a same media unit. It needs to be ensured that the access network device can identify each media unit, so that the access network device can further accurately determine, based on the marking information, whether the received media unit is the media unit allowed to be discarded.

In a possible implementation, the user plane network element may further separately set an identifier of the media unit for the data packets included in the media unit. In this way, the access network device can identify one media unit by using data packets that have a same identifier of the media unit.

For example, the user plane network element may further receive second indication information from the session management network element, where the second indication information indicates the user plane network element to set a same identifier of a media unit for data packets that belong to the same media unit. The second indication information may be explicitly expressed or implicitly expressed. For details, refer to related descriptions of the first indication information. The details are not described herein again. It may be understood that the first indication information and the second indication information may be separately sent, or may be carried by using an N4 rule.

Example 1: The user plane network element may set a unique identifier of a media unit for data packets that belong to the same media unit. In this case, the data packets that belong to the same media unit have the same identifier of the media unit, and data packets that belong to different media units have different identifiers of the media units. Correspondingly, the access network device may identify, as one media unit, the data packets having the same identifier of the media unit. In addition, the data packets that belong to the different media units have the different identifiers of the media units, and the access network device can distinguish each received media unit. For example, a media unit A, a media unit B, and a media unit C are three media units; and the user plane network element sets an identifier 1 for each data packet in the media unit A, sets an identifier 2 for each data packet in the media unit B, and sets an identifier 3 for each data packet in the media unit C. The identifier 1, the identifier 2, and the identifier 3 are different from each other. Correspondingly, the access network device uses data packets having the identifier 1 as one media unit, uses data packets having the identifier 2 as one media unit, and uses data packets having the identifier 3 as one media unit. Because the identifier 1, the identifier 2, and the identifier 3 are different from each other, the access network device can successfully identify three different media units.

Example 2: The user plane network element sets different identifiers of media units for data packets in the media units that are not adjacent to each other. In addition, data packets that belong to a same media unit have a same identifier of the media unit, and data packets that belong to different media units may have a same identifier of the media units, or may have different identifiers of the media units. For example, a media unit A, a media unit B, and a media unit C are three adjacent media units; and the user plane network element sets an identifier 1 for each data packet in the media unit A, sets an identifier 2 for each data packet in the media unit B, and sets an identifier 1 for each data packet in the media unit C. In the foregoing manner, the data packets that belong to different media units can be easily distinguished. Correspondingly, the access network device uses data packets having the identifier 1 as one media unit, and uses data packets having the identifier 2 as one media unit. Because the identifier 1 and the identifier 2 are different from each other, the access network device can successfully identify the two media units. Then, the access network device receives data packets having the identifier 1 again. Before the access network device receives the data packets having the identifier 1 again, the data packets received by the access network device have the identifier 2. Therefore, the access network device does not classify the data packets that are received again that have the identifier 1 and the data packets that are previously received and that have the identifier 1 into a same media unit, and the access network device identifies three different media units.

In a possible design, the marking information is the identifier of the media unit. In this case, that the marking information is for determining that the media unit is a media unit allowed to be discarded may be understood as: The media unit that carries the identifier of the media unit is the media unit allowed to be discarded, the media unit that carries the marking information is the media unit allowed to be discarded, the media unit is discarded based on the identifier of the media unit, or the identifier of the media unit implicitly carries the marking information.

In addition, in a possible design, the user plane network element may further set an identifier of a media unit group for the media unit, where the media unit group includes at least one media unit.

For example, if a media unit A belongs to a media unit group 1, a media unit B belongs to a media unit group 2, and the media unit group 1 is different from the media unit group 2, the user plane network element sets an identifier of the media unit group 1 for the media unit A, and sets an identifier of the media unit group 2 for the media unit B. For example, the user plane network element sets an identifier of a GOP for data frames that belong to the same GOP.

In a possible implementation, the user plane network element receives third indication information from the session management network element, where the third indication information indicates to set a same identifier of a media unit group for media units that belong to the same media unit group. The third indication information may be explicitly expressed or implicitly expressed. For details, refer to related descriptions of the first indication information. The details are not described herein again. It may be understood that the first indication information, the second indication information, and the third indication information may be separately sent, or may be carried by using the N4 rule.

Step 402: The user plane network element sends the media unit that carries the marking information.

For example, the user plane network element may send, to the access network device, the media unit that carries the marking information. Alternatively, the user plane network element sends, to the access network device through several other user plane network elements, the media unit that carries the marking information.

Step 403: The access network device receives the media unit that carries the marking information, and discards the media unit based on the marking information.

It should be noted that the received media unit is not necessarily discarded, and may not be discarded. For example, when the access network device needs to discard a data packet, for example, congestion occurs on the access network device, transmission quality over an air interface of the access network device deteriorates, or a transmission capability of the access network device deteriorates, the access network device may discard the media unit based on the marking information.

It may be understood that in some scenarios, the access network device needs to identify which data packets belong to a same media unit. For example, each data packet may carry an identifier of a media unit, and the access network device determines that data packets that carry a same identifier of a media unit belong to one media unit. For how the access network device identifies one media unit, refer to related descriptions in the example 1 and the example 2. Details are not described herein again.

In a possible design, the marking information is the identifier of the media unit, and that the access network device discards the media unit based on the identifier of the media unit may be understood as: The access network device discards data packets having the same identifier of the media unit, or the access network device discards a media unit indicated by the identifier of the media unit. In this case, it may be considered that the identifier of the media unit implicitly carries the marking information. Alternatively, this may be understood as: A media unit that carries the identifier of the media unit is the media unit allowed to be discarded. That the marking information is for determining that the media unit is a media unit allowed to be discarded may be understood as: The media unit that carries the identifier of the media unit is a discardable media unit, or the media unit is discarded based on the identifier of the media unit. Therefore, the access network device may discard the media unit based on the identifier of the media unit, to discard, at the granularity of the media unit, all the data packets included in the media unit.

In a possible implementation, the access network device may determine, based on the marking information, that the media unit is the media unit allowed to be discarded or the media unit not allowed to be discarded.

In correspondence to the foregoing four scenarios, the following describes how the access network device discards the media unit based on the marking information.

Scenario 1: When the marking information indicates that the media unit is the media unit allowed to be discarded, the access network device may discard the media unit that carries the marking information. Alternatively, when the marking information indicates that the media unit is the media unit not allowed to be discarded, the access network device may discard a media unit that does not carry the marking information.

In a possible implementation, the access network device may receive first configuration information from the session management network element, where the first configuration information indicates that a media unit corresponding to the marking information is the media unit allowed to be discarded. Further, the access network device discards, based on the first configuration information, the media unit that carries the marking information and that is allowed to be discarded. Alternatively, the access network device may receive first configuration information from the session management network element, where the first configuration information indicates that a media unit corresponding to the marking information is the media unit not allowed to be discarded. Further, the access network device discards, based on the first configuration information, the media unit that does not carry the marking information and that is allowed to be discarded.

It may be understood that not all media units that carry the marking information need to be discarded, and a media unit that carries the marking information may not be discarded. This may specifically depend on a network status (for example, a congestion degree, the transmission quality, or the transmission capability) of the access network device. In addition, a quantity of media units to be discarded may be further adjusted and controlled with reference to a parameter for processing a media unit. For details, refer to the following related descriptions.

Scenario 2: When the marking information indicates the importance information of the media unit, the access network device discards the media unit based on the importance information of the media unit. For example, the access network device determines the importance of the media unit based on the importance information of the media unit, and then discards the media unit based on the importance of the media unit. For example, for a plurality of media units having different importance, a media unit with low importance is preferentially discarded. Alternatively, when the importance of the media unit is lower than preset importance, the access network device discards the media unit whose importance is lower than the preset importance.

It may be understood that not all media units with low importance need to be discarded, and a media unit with low importance may not be discarded. This may specifically depend on a network status (for example, a congestion degree, the transmission quality, or the transmission capability) of the access network device. In addition, a quantity of media units to be discarded may be further adjusted and controlled with reference to a parameter for processing a media unit. For details, refer to the following related descriptions.

In a possible implementation, the access network device may receive second configuration information from the session management network element, where the second configuration information indicates that a media unit having preset importance is the media unit allowed to be discarded. If the access network device determines, based on the marking information carried by the received media unit, that the importance of the media unit is the preset importance, the access network device may discard the media unit.

It may be understood that the preset importance may include one or more importance values. The preset importance may be determined by the application function network element or the session management network element.

For example, the second configuration information indicates that a media unit whose importance is at the second level is the media unit allowed to be discarded. If the access network device determines that the received media unit carries marking information indicating that the importance of the media unit is at the second level, the media unit may be discarded. If the access network device determines that the received media unit carries marking information indicating that the importance of the media unit is at the first level, the media unit may not be discarded.

Scenario 3: When the marking information indicates the type information of the media unit, the access network device discards the media unit based on the type information of the media unit. For example, when the marking information indicates the type information of the media unit, the access network device determines the type of the media unit based on the type information of the media unit, and then discards the media unit based on the type of the media unit. For example, for a plurality of media units of different types, a media unit of a specific type is preferentially discarded.

It may be understood that not all media units of the specific type need to be discarded, and a media unit of the specific type may not be discarded. This may specifically depend on a network status (for example, a congestion degree, the transmission quality, or the transmission capability) of the access network device. In addition, a quantity of media units to be discarded may be further adjusted and controlled with reference to a parameter for processing a media unit. For details, refer to the following related descriptions.

In a possible implementation, the access network device receives third configuration information from the session management network element, where the third configuration information indicates that a media unit of a preset type is the media unit allowed to be discarded. If the access network device determines, based on the marking information carried by the received media unit, that the type of the media unit is the preset type, the access network device may discard the media unit.

It may be understood that the preset type may include one or more types of media units. The preset type may be determined by the application function network element or the session management network element.

For example, the third configuration information indicates that a media unit whose type is the P-frame or the B-frame is the media unit allowed to be discarded. If the access network device determines that the received media unit carries marking information indicating that the type of the media unit is the P-frame or the B-frame, the media unit may be discarded. If the access network device determines that the received media unit carries marking information indicating that the type of the media unit is the I-frame, the media unit may not be discarded.

It can be learned that, in the foregoing three possible scenarios, the access network device may determine, based on the marking information, whether to discard the received media unit.

It should be noted that the first configuration information, the second configuration information, and the third configuration information are all optional information, and the access network device may determine, based on a local configuration, whether to discard the media unit that carries the marking information.

In addition, for the foregoing scenario 4, the marking information indicates the discarding priority of the media unit.

In a possible design, the access network device discards the media unit based on the discarding priority information of the media unit. For example, when the marking information indicates the discarding priority information of the media unit, the access network device determines the discarding priority of the media unit based on the discarding priority information of the media unit, and then discards the media unit based on the discarding priority of the media unit. For example, for a plurality of media units with different discarding priorities, a media unit with a high discarding priority is preferentially discarded.

In a possible design, the access network device receives fourth configuration information from the session management network element, where the fourth configuration information indicates a discarding sequence corresponding to a plurality of discarding priorities. The access network device determines a discarding ranking of the received media unit based on the discarding sequence and the marking information carried by the received media unit.

For example, because the discarding priority may include a plurality of values, for example, the discarding priority includes A, B, C, and D, the fourth configuration information may indicate that the discarding sequence is A, B, C, and D or D, C, B, and A.

For another example, the fourth configuration information indicates that the discarding priority I is higher than the discarding priority II, in other words, the media unit corresponding to the discarding priority I is discarded earlier than the media unit corresponding to the discarding priority II. If the access network device receives a media unit carrying marking information indicating that a discarding priority of the media unit is the discarding priority I and a media unit carrying marking information indicating that a discarding priority of the media unit is the discarding priority II, when a media unit needs to be discarded, the access network device determines that the media unit corresponding to the discarding priority I is to be discarded earlier than the media unit corresponding to the discarding priority I.

It may be understood that for the configuration information in the scenario 1 to the scenario 4, the session management network element may send any one of the foregoing pieces of configuration information to the access network device through an access and mobility management network element. For example, the session management network element sends an N1N2 message transfer (Namf_Communication_N1N2MessageTransfe) message to the access and mobility management network element (for example, an AMF), where the N1N2 message transfer message includes N2 message information (N2 message information), and the N2 message information may carry the any one of the foregoing pieces of configuration information. The access and mobility management network element sends the N2 message information to the access network device.

In a possible implementation, the access network device may discard the media unit based on the marking information and the parameter for processing a media unit.

For example, the access network device receives, from the session management network element, the parameter for processing a media unit. For example, the session management network element may send, to the access network device through the access and mobility management network element, the parameter for processing a media unit. For example, the session management network element sends an N1N2 message transfer message to the access and mobility management network element, where the N1N2 message transfer message includes N2 message information, and the N2 message information may carry the parameter for processing a media unit. The access and mobility management network element sends the N2 message information to the access network device.

For example, that the access network device discards the media unit based on the marking information and the parameter for processing a media unit may be understood as: The access network device determines that a quantity of discarded media units does not exceed an upper limit value specified by the parameter for processing a media unit, and discards the media unit based on the identification information. Alternatively, when the access network device discards the media unit based on the identification information, it needs to be ensured that a quantity of discarded media units does not exceed an upper limit value specified by the parameter for processing a media unit.

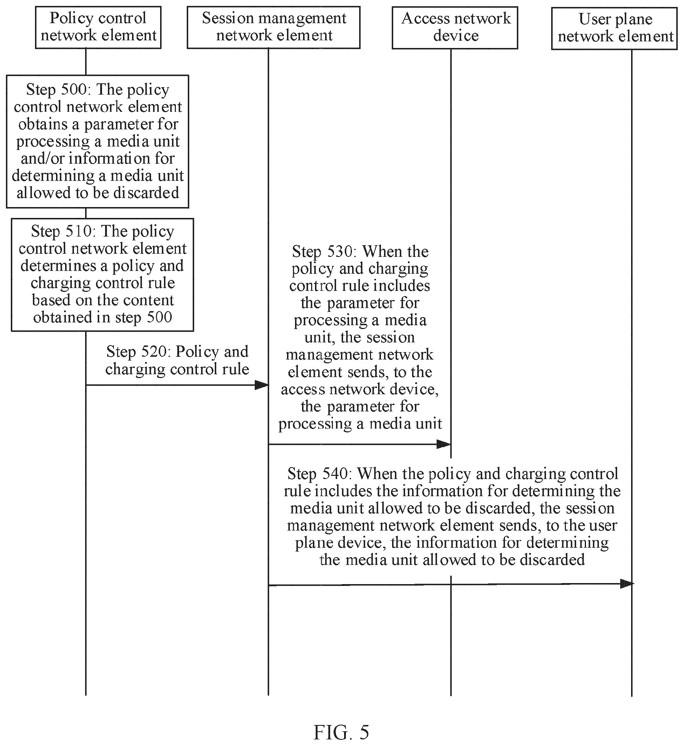

How a session management network element obtains a parameter for processing a media unit and how to send, to an access network device, the parameter for processing a media unit are described in the following embodiment shown in FIG. 5.

With reference to two possible implementations, the following describes how the access network device determines, based on marking information and the parameter for processing a media unit, whether to discard a media unit.

In a first possible implementation, the parameter for processing a media unit includes a maximum quantity of discardable media units. When a quantity of discarded media units is less than the maximum quantity of discardable media units, the access network device discards the media unit based on the marking information.

In an example, the maximum quantity of discardable media units is a maximum quantity of discardable media units in a media unit group. In addition, the parameter for processing a media unit may further include a discarding range parameter, namely, a parameter indicating an application range of the maximum quantity of discardable media units. For example, the discarding range parameter may indicate that the maximum quantity of discardable media units is applicable to media units having a same identifier of the media unit group.

For example, before discarding the media unit based on the marking information, the access network device needs to determine a quantity of discarded media units in the media unit group (for example, a media unit group X) to which the media unit belongs, in other words, count the discarded media units in the media unit group X. If the quantity of discarded media units is less than the maximum quantity of discardable media units, the access network device may discard the media unit.

In another example, the maximum quantity of discardable media units is a maximum quantity of discardable media units in a time window. In addition, the parameter for processing a media unit may further include a discarding range parameter, namely, a parameter indicating an application range of the maximum quantity of discardable media units. For example, the discarding range parameter may indicate that the maximum quantity of discardable media units is applicable to media units in one time window.

For example, when needing to discard a data packet, the access network device determines a start location of a time window, where duration T of the time window is preset duration. Before discarding the media unit based on the marking information, the access network device determines a quantity of discarded media units in the time window (for example, a time window 1) in which the media unit is located, in other words, counts the discarded media units in the time window 1. If the quantity of discarded media units is less than the maximum quantity of discardable media units, the access network device may discard the media unit.

In a second possible design, the parameter for processing a media unit includes a maximum ratio of discardable media units. When a ratio of discarded media units is less than the maximum ratio of discardable media units, the access network device discards the media unit based on the marking information.

In an example, the maximum ratio of discardable media units is a maximum ratio of discardable media units in a media unit group, to be specific, the maximum ratio in this case is a ratio of a maximum quantity of discardable media units in the media unit group to a total quantity of media units included in the media unit group. In addition, the parameter for processing a media unit may further include a discarding range parameter, namely, a parameter indicating an application range of the maximum ratio of discardable media units. For example, the discarding range parameter may indicate that the maximum ratio of discardable media units is applicable to media units having a same identifier of the media unit group.

For example, before discarding the media unit based on the marking information, the access network device needs to determine a quantity of discarded media units in the media unit group (for example, a media unit group X) to which the media unit belongs, in other words, count the discarded media units in the media unit group X. If a ratio of the quantity of discarded media units to the total quantity of media units included in the media unit group X is less than the maximum ratio of discardable media units, the access network device may discard the media unit.

In another example, the maximum ratio of discardable media units is a maximum ratio of discardable media units in a time window. To be specific, the maximum ratio in this case is a ratio of a maximum quantity of discardable media units in the time window to a total quantity of media units included in the time window. In addition, the parameter for processing a media unit may further include a discarding range parameter, namely, a parameter indicating an application range of the maximum ratio of discardable media units. For example, the discarding range parameter may indicate that the maximum ratio of discardable media units is applicable to media units in one time window.

For example, when needing to discard a data packet, the access network device determines a start location of a time window, where duration T of the time window is preset duration. Before discarding the media unit based on the marking information, the access network device first determines a quantity of discarded media units in the time window (for example, a time window 1) in which the media unit is located, in other words, counts the discarded media units in the time window 1. If a ratio of the quantity of discarded media units to the total quantity of media units included in the time window is less than the maximum ratio of discardable media units, the access network device may discard the media unit.

According to the foregoing method, all data packets included in the media unit can be discarded at a granularity of the media unit, to avoid significant degradation in video quality caused by random discarding of a data packet. This ensures user experience.

FIG. 5 shows a process of interaction between a policy control network element and a session management network element and a process in which the session management network element configures a user plane network element and an access network device that are performed before step 400.

Step 500: The policy control network element obtains a parameter for processing a media unit and/or information for determining a media unit allowed to be discarded.

For example, the policy control network element may receive, from an application function network element, the parameter for processing a media unit and/or the information for determining the media unit allowed to be discarded; or may receive, from an application function network element through a network exposure function network element, the parameter for processing a media unit and/or the information for determining the media unit allowed to be discarded. Alternatively, the policy control network element may obtain, based on existing information such as default configuration information or subscription information, the parameter for processing a media unit and/or the information for determining the media unit allowed to be discarded.

For example, the parameter for processing a media unit includes a maximum quantity of discardable media units or a maximum ratio of discardable media units. The maximum quantity of discardable media units is a maximum quantity of discardable media units in a media unit group, or is a maximum quantity of discardable media units in a time window. The maximum ratio of discardable media units is a maximum ratio of discardable media units in a media unit group, or is a maximum ratio of discardable media units in a time window. For the parameter for processing a media unit, refer to related descriptions in the embodiment shown in FIG. 3. Details are not repeated herein.

For example, the information for determining the media unit allowed to be discarded includes at least one of type information of the media unit allowed to be discarded, location information of the media unit allowed to be discarded, a sequence number of the media unit allowed to be discarded, or media unit discarding allowance indication information. For details about the information for determining the media unit allowed to be discarded, refer to related descriptions in the scenario 1 in step 401. The details are not described herein again.

Step 510: The policy control network element determines a policy and charging control rule based on the content obtained in step 500.

For example, the policy and charging control rule includes the parameter for processing a media unit and/or the information for determining the media unit allowed to be discarded.

Step 520: The policy control network element sends the policy and charging control rule to the session management network element.

Step 530: When the policy and charging control rule includes the parameter for processing a media unit, the session management network element sends, to the access network device, the parameter for processing a media unit.

In addition, it should be noted that the session management network element may alternatively obtain, based on the existing information such as the default configuration information or the subscription information, the parameter for processing a media unit.

Step 540: When the policy and charging control rule includes the information for determining the media unit allowed to be discarded, the session management network element sends, to the user plane device, the information for determining the media unit allowed to be discarded.

For example, the session management network element sends an N4 rule to the user plane network element, where the N4 rule indicates the information for determining the media unit allowed to be discarded.

In addition, it should be noted that the session management network element may alternatively obtain, based on the existing information such as the default configuration information or the subscription information, the information for determining the media unit allowed to be discarded.

In correspondence to the foregoing scenario 2, the policy control network element further obtains information for determining importance. The information for determining importance may include at least one of a correspondence between importance and a type of a media unit, a correspondence between importance and a location of a media unit, or a correspondence between importance and a sequence number of a media unit. The policy control network element sends, to the session management network element, the information for determining importance. The session management network element sends, to the user plane network element, the information for determining importance. In addition, for a manner in which the policy control network element obtains the information for determining importance, refer to the manner in which the policy control network element obtains the parameter for processing a media unit. The session management network element may alternatively obtain, based on the existing information such as the default configuration information or the subscription information, the information for determining importance.

For example, the policy control network element includes, in the policy and charging control rule, the information for determining importance. Correspondingly, if the policy and charging control rule includes the information for determining importance, the session management network element sends, to the user plane network element, the information for determining importance. For example, the session management network element sends an N4 rule to the user plane network element, where the N4 rule indicates the information for determining importance.

**In** correspondence to the foregoing scenario 3, the session management network element sends, to the user plane network element, information indicating the user plane network element to mark a received media unit with a corresponding type of the media unit. The session management network element sends an N4 rule to the user plane network element, where the N4 rule includes the information indicating the user plane network element to mark the received media unit with the corresponding type of the media unit.

**In** correspondence to the foregoing scenario 4, the policy control network element further receives information for determining a discarding allowance priority. The information for determining a discarding allowance priority includes at least one of a correspondence between a discarding allowance priority and a type of a media unit, a correspondence between a discarding allowance priority and a location of a media unit, or a correspondence between a discarding allowance priority and a sequence number of a media unit. The policy control network element sends, to the session management network element, the information for determining a discarding allowance priority. The session management network element sends, to the user plane network element, the information for determining a discarding allowance priority. In addition, for a manner in which the policy control network element obtains the information for determining a discarding allowance priority, refer to the manner in which the policy control network element obtains the parameter for processing a media unit. The session management network element may alternatively obtain, based on the existing information such as the default configuration information or the subscription information, the information for determining a discarding allowance priority.

For example, the policy control network element includes, in the policy and charging control rule, the information for determining a discarding allowance priority. Correspondingly, if the policy and charging control rule includes the information for determining a discarding allowance priority, the session management network element sends, to the user plane network element, the information for determining a discarding allowance priority. For example, the session management network element sends an N4 rule to the user plane network element, where the N4 rule indicates the information for determining a discarding allowance priority.

In addition, in a possible design, the session management network element may further send first indication information to the user plane network element, where the first indication information indicates to set marking information for the received media unit. Therefore, the user plane network element sets the marking information for the received media unit based on the first indication information.

In correspondence to the foregoing scenario 1, the marking information indicates that the media unit is the media unit allowed to be discarded. Further, in a possible design, the session management network element may send first configuration information to the access network device, where the first configuration information indicates that a media unit corresponding to the marking information is the media unit allowed to be discarded.

In correspondence to the foregoing scenario 2, the marking information indicates importance information of the media unit. Further, in a possible design, the session management network element sends second configuration information to the access network device, where the second configuration information indicates that a media unit with preset importance is the media unit allowed to be discarded.

In correspondence to the foregoing scenario 3, the marking information indicates type information of the media unit. Further, in a possible design, the session management network element sends third configuration information to the access network device, where the third configuration information indicates that a media unit of a preset type is the media unit allowed to be discarded.

In correspondence to the foregoing scenario 4, the marking information indicates discarding priority information of the media unit. Further, in a possible design, the session management network element sends fourth configuration information to the access network device, where the fourth configuration information indicates a discarding sequence corresponding to a plurality of discarding priorities.

In addition, the session management network element sends second indication information to the user plane network element, where the second indication information indicates the user plane network element to set a same identifier of a media unit for data packets that belong to the same media unit. Therefore, the user plane network element sets an identifier of the media unit for a data packet in the received media unit based on the second indication information.

In addition/Alternatively, the session management network element sends third indication information to the user plane network element, where the third indication information indicates to set a same identifier of a media unit group for media units that belong to the same media unit group. Therefore, the user plane network element sets an identifier of a media unit group for the received media unit based on the second indication information.

For example, the first indication information, the second indication information, and the third indication information may also be carried in an N4 rule.

According to the foregoing method, the access network device and the user plane network element can be configured, so that the user plane network element adds the marking information to the received media unit, and the access network device identifies, based on the marking information, the media unit allowed to be discarded.

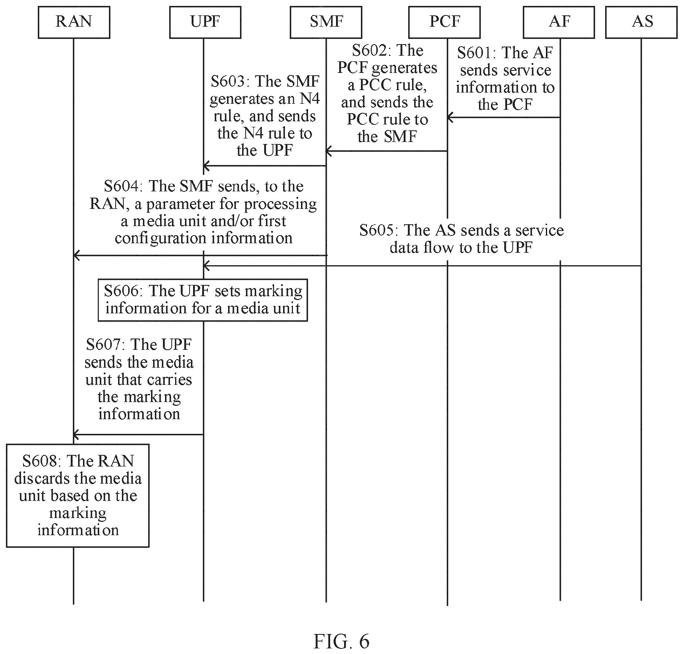

The following describes the embodiments shown in FIG. 4 and FIG. 5 by using examples in FIG. 6, FIG. 7, FIG. 8, and FIG. 9. It should be noted that the following embodiments shown in FIG. 6, FIG. 7, FIG. 8, and FIG. 9 are merely examples, and are not intended to limit this application.

In the embodiment shown in FIG. 6, marking information indicates that a media unit is a media unit allowed to be discarded. This corresponds to the foregoing scenario 1. An example in which the media unit is a data frame is used.

S601: An AF sends service information to a PCF.

The service information may include service description information, information for determining a media unit allowed to be discarded, and a parameter for processing a media unit. For the information for determining the media unit allowed to be discarded and the parameter for processing a media unit, refer to related descriptions in the embodiment shown in FIG. 3. Details are not repeated herein.

It should be noted that the PCF may alternatively obtain the service information from the AF through a NEF. That the PCF receives the service information from the AF is merely used as an example herein for description. In addition, S601 is an optional step. The PCF may alternatively obtain the service information based on existing information such as default configuration information or subscription information.

S602: The PCF generates a policy and charging control (policy and charging control, PCC) rule (rule), and sends the PCC rule to an SMF.

The PCC rule carries the service description information, the information for determining the media unit allowed to be discarded, and the parameter for processing a media unit. It may be understood that, the information for determining the media unit allowed to be discarded and the parameter for processing a media unit herein are separately generated based on corresponding content in the service information.

S603: The SMF generates an N4 rule, and sends the N4 rule to a UPF.

The N4 rule carries the information for determining the media unit allowed to be discarded. In addition, the N4 rule may further carry at least one of first indication information, second indication information, or third indication information.

In addition, in some possible embodiments, S601 and S602 are optional steps, and the SMF may generate the N4 rule based on the existing information such as the default configuration information or the subscription information. In addition, S603 may also be an optional step.

S604: The SMF sends, to a RAN, the parameter for processing a media unit and/or first configuration information.

The first configuration information indicates that a media unit corresponding to the marking information is the media unit allowed to be discarded.

S605: An application server (application server, AS) sends a service data flow to the UPF, where the service data flow includes a plurality of media units, and each media unit includes a plurality of data packets.

S606: The UPF sets the marking information for a media unit.

For example, the UPF determines, based on the information for determining the media unit allowed to be discarded in S603, whether a received media unit is the media unit allowed to be discarded; and if yes, sets the marking information for the media unit. In this case, the marking information indicates that the media unit is the media unit allowed to be discarded.

In addition, the UPF sets the marking information for a media unit based on information in the detected service flow, for example, sets the marking information based on type information that is of the media unit and that is carried in the service flow or based on media unit discarding allowance indication information carried in the service flow, or sets the marking information in another manner. This is not limited herein.

In addition, the UPF further sets an identifier of the media unit for each data packet in the received media unit.

Optionally, the UPF further sets an identifier of a media unit group for the media unit.

S607: The UPF sends the media unit that carries the marking information.

S608: The RAN receives the media unit that carries the marking information, and discards the media unit based on the marking information.

The RAN may first determine the received media unit based on the data packet corresponding to the identifier of the media unit. The RAN further discards the media unit based on the first configuration information in S604.

In addition, the RAN may discard the media unit based on the marking information and the parameter for processing a media unit.

In a first possible implementation, the parameter for processing a media unit includes a maximum quantity of discardable media units, where the maximum quantity of discardable media units is a maximum quantity of discardable media units in the media unit group. The RAN needs to first determine a quantity of discarded media units in the media unit group to which the media unit belongs. If the quantity of discarded media units is less than the maximum quantity of discardable media units, the RAN may discard the media unit based on the marking information.

Alternatively, the parameter for processing a media unit includes a maximum quantity of discardable media units, where the maximum quantity of discardable media units is a maximum quantity of discardable media units in a time window. The RAN first determines a quantity of discarded media units in the time window in which the media unit is located. If the quantity of discarded media units is less than the maximum quantity of discardable media units, the RAN may discard the media unit based on the marking information.

In a second possible design, the parameter for processing a media unit includes a maximum ratio of discardable media units, where the maximum ratio of discardable media units is a maximum ratio of discardable media units in a media unit group. The RAN needs to first determine a quantity of discarded media units in the media unit group to which the media unit belongs. If a ratio of the quantity of discarded media units to a total quantity of media units included in the media unit group is less than the maximum ratio of discardable media units, the RAN may discard the media unit based on the marking information.

Alternatively, the parameter for processing a media unit includes a maximum ratio of discardable media units, where the maximum ratio of discardable media units is a maximum ratio of discardable media units in a time window. The RAN first determines a quantity of discarded media units in the time window in which the media unit is located. If a ratio of the quantity of discarded media units to a total quantity of media units included in the time window is less than the maximum ratio of discardable media units, the RAN may discard the media unit based on the marking information.

According to the foregoing method, the RAN discards the media unit based on to the marking information, so that all data packets included in the media unit can be discarded at a granularity of the media unit, to avoid significant degradation in video quality caused by random discarding of a data packet. This ensures user experience.

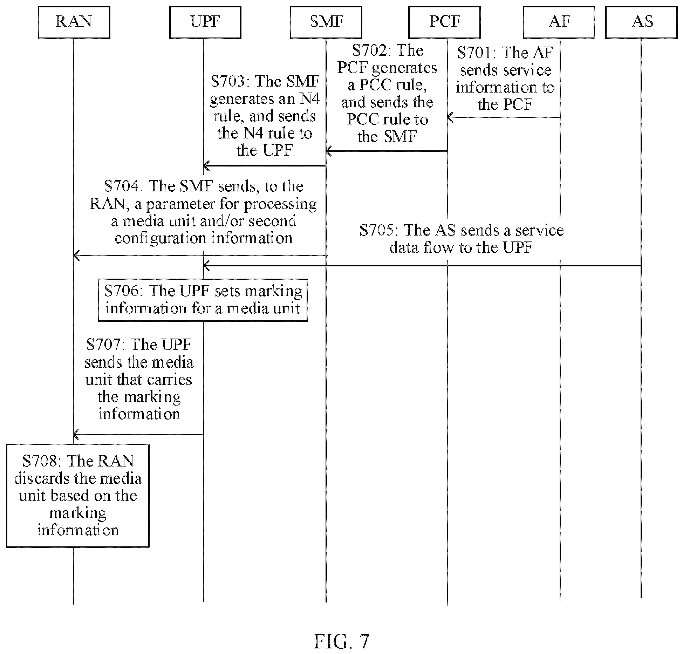

In the embodiment shown in FIG. 7, marking information indicates importance information of a received media unit. This corresponds to the foregoing scenario 2. An example in which the media unit is a data frame is used.

S701: An AF sends service information to a PCF.

The service information may include service description information, information for determining importance, and a parameter for processing a media unit. For the information for determining importance and the parameter for processing a media unit, refer to related descriptions in the embodiment shown in FIG. 3. Details are not repeated herein.

It should be noted that the PCF may alternatively obtain the service information from the AF through a NEF. That the PCF receives the service information from the AF is merely used as an example herein for description. In addition, S701 is an optional step. The PCF may alternatively obtain the service information based on existing information such as default configuration information or subscription information.

S702: The PCF generates a PCC rule, and sends the PCC rule to an SMF.

The PCC rule carries the service description information, the information for determining importance, and the parameter for processing a media unit.

S703: The SMF generates an N4 rule, and sends the N4 rule to a UPF.

The N4 rule carries the information for determining importance. In addition, the N4 rule may further carry at least one of first indication information, second indication information, or third indication information.

In addition, in some possible embodiments, S701 and S702 are optional steps, and the SMF may generate the N4 rule based on the existing information such as the default configuration information or the subscription information. In addition, S703 may also be an optional step.

S704: The SMF sends, to a RAN, the parameter for processing a media unit and/or second configuration information.

The second configuration information indicates that a media unit at a preset importance level is a media unit allowed to be discarded. For example, the second configuration information indicates that a media unit whose importance level is a second level is the media unit allowed to be discarded.

S705: An AS sends a service data flow to the UPF, where the service data flow includes a plurality of media units, and each media unit includes a plurality of data packets.

S706: The UPF sets the marking information for a media unit.

For example, the UPF sets the marking information for the media unit based on importance of the media unit. For example, the UPF may first determine a type (for example, an I-frame, a P-frame, or a B-frame) of the media unit, and then determine importance information of the media unit based on the type of the media unit. For example, importance corresponding to the P-frame or the B-frame is low importance, and importance corresponding to the I-frame is high importance, in other words, importance of the I-frame is higher than importance of the P-frame and the B-frame. Alternatively, the UPF sets the marking information for the media unit based on the information for determining importance. For example, the information for determining an importance level includes a correspondence between an importance level and a media unit, where the importance corresponding to the B-frame is at the second level, and the type of the media unit received by the UPF is the B-frame. In this case, marking information indicating that the importance of the media unit is at the second level is set for the media unit.

In addition, the UPF further sets an identifier of the media unit for each data packet in the received media unit.

Optionally, the UPF further sets an identifier of a media unit group for the media unit.

S707: The UPF sends the media unit that carries the marking information.

S708: The RAN receives the media unit that carries the marking information, and discards the media unit based on the marking information.

The RAN discards the media unit based on the importance information of the media unit. For example, the RAN may determine the received media unit based on the data packet corresponding to the identifier of the media unit. When the marking information indicates the importance information of the media unit, the RAN determines the importance of the media unit based on the importance information of the media unit, and then discards the media unit based on the importance of the media unit. For example, for a plurality of media units having different importance, a media unit with low importance is preferentially discarded. Alternatively, when the importance of the media unit is lower than preset importance, the access network device discards the media unit. Alternatively, the RAN may discard the media unit based on the second configuration information. For example, when the second configuration information indicates that a media unit whose importance is at the second level is the media unit allowed to be discarded, the media unit received by the RAN carries the marking information indicating that the importance of the media unit is at the second level. In this case, the RAN discards the media unit based on the second configuration information.

In addition, the RAN may discard the media unit based on the marking information and the parameter for processing a media unit. Refer to S608.

According to the foregoing method, the RAN discards the media unit based on the importance of the media unit, so that all data packets included in the media unit can be discarded at a granularity of the media unit, to avoid significant degradation in video quality caused by random discarding of a data packet. This ensures user experience.

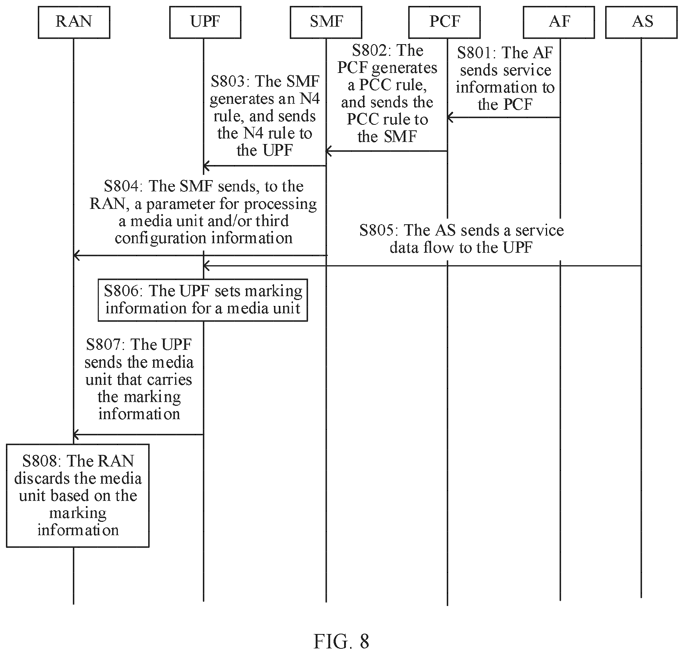

In the embodiment shown in FIG. 8, marking information indicates type information of a received media unit. This corresponds to the foregoing scenario 3. An example in which the media unit is a data frame is used.

S801: An AF sends service information to a PCF.

The service information may include service description information and a parameter for processing a media unit. For the parameter for processing a media unit, refer to related descriptions in the embodiment shown in FIG. 3. Details are not repeated herein.

It should be noted that the PCF may alternatively obtain the service information from the AF through a NEF. That the PCF receives the service information from the AF is merely used as an example herein for description. In addition, S801 is an optional step. The PCF may alternatively obtain the service information based on existing information such as default configuration information or subscription information.

S802: The PCF generates a PCC rule, and sends the PCC rule to an SMF.

The PCC rule carries the service description information and the parameter for processing a media unit.

S803: The SMF generates an N4 rule, and sends the N4 rule to a UPF.

The N4 rule carries information indicating the user plane network element to mark the received media unit with a corresponding type of the media unit. In addition, the N4 rule may further carry at least one of first indication information, second indication information, or third indication information.

In addition, in some possible embodiments, S801 and S802 are optional steps, and the SMF may generate the N4 rule based on the existing information such as the default configuration information or the subscription information. In addition, S803 may also be an optional step.

S804: The SMF sends, to a RAN through an AMF, the parameter for processing a media unit and/or third configuration information.

The third configuration information indicates that a media unit of a preset type is a media unit allowed to be discarded. For example, the third configuration information indicates that a media unit whose media unit type is a B-frame or a P-frame is the media unit allowed to be discarded.

S805: An AS sends a service data flow to the UPF, where the service data flow includes a plurality of media units, and each media unit includes a plurality of data packets.

S806: The UPF sets the marking information for a media unit.

For example, the UPF sets the marking information for the media unit based on a type of the media unit. For example, when the type of the received media unit is the B-frame, the UPF sets, for the media unit, marking information indicating that the type of the media unit is the B-frame.

In addition, the UPF further sets an identifier of the media unit for each data packet in the received media unit.

Optionally, the UPF further sets an identifier of a media unit group for the media unit.

S807: The UPF sends the media unit that carries the marking information.

S808: The RAN receives the media unit that carries the marking information, and discards the media unit based on the marking information.

For example, the RAN discards the media unit based on type information of the media unit. For example, when the marking information indicates the type information of the media unit, the RAN determines the type of the media unit based on the type information of the media unit, and then discards the media unit based on the type of the media unit. For example, for a plurality of media units of different types, a media unit of a specific type is preferentially discarded. Alternatively, the RAN may discard the media unit based on the third configuration information. For example, when the third configuration information indicates that the media unit whose media unit type is the B-frame or the P-frame is the media unit allowed to be discarded, and the media unit received by the RAN carries the marking information indicating that the type of the media unit is the B-frame, the RAN discards the media unit based on the third configuration information.

In addition, the RAN may discard the media unit based on the marking information and the parameter for processing a media unit. Refer to S608.

According to the foregoing method, the RAN discards the media unit based on the type information of the media unit, so that all data packets included in the media unit can be discarded at a granularity of the media unit, to avoid significant degradation in video quality caused by random discarding of a data packet. This ensures user experience.

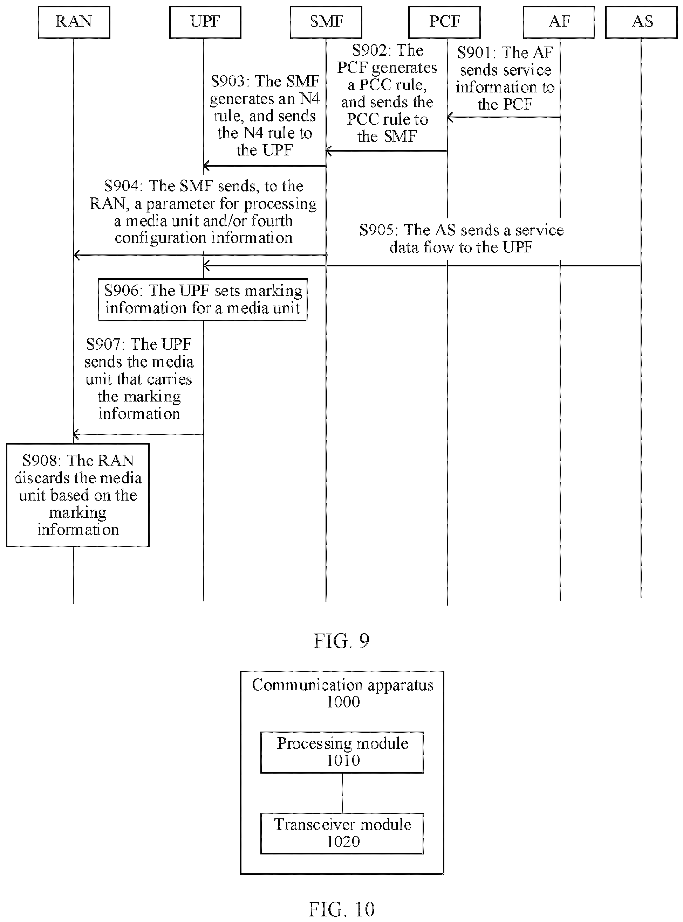

In the embodiment shown in FIG. 9, marking information indicates discarding allowance priority information of a received media unit. This corresponds to the foregoing scenario 4. An example in which the media unit is a data frame is used.

S901: An AF sends service information to a PCF.

The service information may include service description information, information for determining a discarding allowance priority, and a parameter for processing a media unit. For the information for determining a discarding allowance priority and the parameter for processing a media unit, refer to related descriptions in the embodiment shown in FIG. 3. Details are not repeated herein.

It should be noted that the PCF may alternatively obtain the service information from the AF through a NEF. That the PCF receives the service information from the AF is merely used as an example herein for description. In addition, S901 is an optional step. The PCF may alternatively obtain the service information based on existing information such as default configuration information or subscription information.

S902: The PCF generates a PCC rule, and sends the PCC rule to an SMF.

The PCC rule carries the service description information, the information for determining a discarding allowance priority, and the parameter for processing a media unit.

S903: The SMF generates an N4 rule, and sends the N4 rule to a UPF.

The N4 rule carries the information for determining a discarding allowance priority. In addition, the N4 rule may further carry at least one of first indication information, second indication information, or third indication information.

In addition, in some possible embodiments, S901 and S902 are optional steps, and the SMF may generate the N4 rule based on the existing information such as the default configuration information or the subscription information. In addition, S903 may also be an optional step.

S904: The SMF sends, to a RAN, the parameter for processing a media unit and/or fourth configuration information.

The fourth configuration information indicates a discarding sequence corresponding to a plurality of discarding priorities. For example, the discarding sequence indicates that a media unit corresponding to a discarding allowance priority I is discarded earlier than a media unit corresponding to a discarding allowance priority II.

S905: An AS sends a service data flow to the UPF, where the service data flow includes a plurality of media units, and each media unit includes a plurality of data packets.

S906: The UPF sets the marking information for a media unit.

For example, the UPF sets the discarding priority information for the media unit. The UPF sets the marking information for the media unit based on the information for determining a discarding allowance priority. For example, the information for determining a discarding allowance priority includes a correspondence between a discarding allowance priority and a type of a media unit. Discarding allowance priorities corresponding to a B-frame and a P-frame are the discarding allowance priority I, and a discarding allowance priority corresponding to an I-frame is the discarding allowance priority II. When a type of the received media unit is the I-frame, the UPF sets, for the media unit, marking information indicating that a discarding allowance priority of the media unit is the discarding allowance priority II.

Alternatively, the UPF determines a discarding priority of the media unit based on type information of the media unit. For example, the user plane network element may determine a type (for example, the I-frame, the P-frame, or the B-frame) of the media unit, and then determine the discarding priority of the media unit based on the type of the media unit. For example, a discarding priority corresponding to the P-frame or the B-frame is the discarding priority I, and a discarding priority corresponding to the I-frame is the discarding priority II. The discarding priority I is higher than the discarding priority II, in other words, the media unit corresponding to the discarding priority I is discarded earlier than the media unit corresponding to the discarding priority II.

In addition, the UPF further sets an identifier of the media unit for each data packet in the received media unit.

Optionally, the UPF further sets an identifier of a media unit group for the media unit.

S907: The UPF sends the media unit that carries the marking information.

S908: The RAN receives the media unit that carries the marking information, and discards the media unit based on the marking information.

The RAN may determine the received media unit based on the data packet corresponding to the identifier of the media unit, and further determine the discarding allowance priority of the media unit based on the fourth configuration information.

For example, the RAN discards the media unit based on the discarding priority information of the media unit. For example, when the marking information indicates the discarding priority information of the media unit, an access network device determines the discarding priority of the media unit based on the discarding priority information of the media unit, and then discards the media unit based on the discarding priority of the media unit. For example, for a plurality of media units with different discarding priorities, a media unit with a high discarding priority is preferentially discarded. For another example, the fourth configuration information indicates that the discarding sequence is that the media unit corresponding to the discarding allowance priority I is discarded earlier than the media unit corresponding to the discarding allowance priority II, and the media unit received by the RAN carries the marking information indicating that the discarding allowance priority of the media unit is the discarding allowance priority II. In this case, the RAN determines that the discarding allowance priority of the media unit is the discarding allowance priority II.

In addition, the RAN may discard the media unit based on the marking information and the parameter for processing a media unit. Refer to S608.

According to the foregoing method, the RAN discards the media unit based on the discarding priority information of the media unit, so that all data packets included in the media unit can be discarded at a granularity of the media unit, to avoid significant degradation in video quality caused by random discarding of a data packet. This ensures user experience.

FIG. 10 is a possible example block diagram of a communication apparatus 1000 according to an embodiment of this application. The apparatus 1000 includes a transceiver module 1020 and a processing module 1010. The transceiver module 1020 may include a receiving unit and a sending unit. The processing module 1010 is configured to control and manage an action of the apparatus 1000. The transceiver module 1020 is configured to support communication between the apparatus 1000 and another network entity. Optionally, the apparatus 1000 may further include a storage unit. The storage unit is configured to store program code and data of the apparatus 1000.

Optionally, each module in the apparatus 1000 may be implemented by software.

Optionally, the processing module 1010 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The controller/processor may implement or execute various example logical blocks, modules, and circuits described with reference to content disclosed in embodiments of this application. The processor may alternatively be a combination of processors implementing a computing function, for example, a combination of one or more microprocessors or a combination of the DSP and a microprocessor. The transceiver module 1020 may be a communication interface, a transceiver, a transceiver circuit, or the like. The communication interface is a general term. In a specific implementation, the communication interface may include a plurality of interfaces. The storage unit may be a memory.

When the apparatus 1000 is a user plane network element or a chip in the user plane network element, the processing module 1010 in the apparatus 1000 may support the apparatus 1000 to perform actions of the user plane network element in the foregoing method examples, for example, may support the apparatus 1000 to perform step 401 in FIG. 4.

The transceiver module 1020 may support the apparatus 1000 to communicate with an access network device or a session management network element. For example, the transceiver module 1020 may support the apparatus 1000 to perform step 400 and step 401 in FIG. 4.

For example, the transceiver module 1020 is configured to receive a media unit, where the media unit includes a plurality of data packets. The processing module 1010 is configured to set marking information for the media unit, where the marking information is for determining that the media unit is a media unit allowed to be discarded. The transceiver module 1020 is configured to send the media unit that carries the marking information.

In a possible design, the marking information indicates that the media unit is the media unit allowed to be discarded. The processing module 1010 is configured to set the marking information for the media unit when the media unit is the media unit allowed to be discarded.

In a possible design, the transceiver module 1020 is configured to receive, from the session management network element or an application server, information for determining the media unit allowed to be discarded.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

In a possible design, the marking information indicates importance information of the media unit. The processing module 1010 is configured to: determine the importance information of the media unit when the marking information is set for the media unit; and set the marking information for the media unit based on the importance information of the media unit.

In a possible design, the marking information indicates type information of the media unit. The processing module 1010 is configured to: determine the type information of the media unit when the marking information is set for the media unit; and set the marking information for the media unit based on the type information of the media unit.

In a possible design, the transceiver module 1020 is configured to receive first indication information from the session management network element, and the processing module 1010 is configured to set the marking information for the received media unit based on the first indication information. The first indication information indicates to set the marking information for the received media unit.

In a possible design, the processing module 1010 is configured to set an identifier of a media unit group for the media unit, where the media unit group includes at least one media unit.

In a possible design, the transceiver module 1020 is configured to receive third indication information from the session management network element, and the processing module 1010 is configured to set the identifier of the media unit group for the received media unit based on the third indication information. The third indication information indicates to set a same identifier of a media unit group for media units that belong to the same media unit group.

In a possible design, the processing module 1010 is configured to separately set an identifier of the media unit for a data packet included in the media unit.

In a possible design, the transceiver module 1020 is configured to receive second indication information from the session management network element, and the processing module 1010 is configured to set the identifier of the media unit for a data packet in the received media unit based on the third indication information. The second indication information indicates the user plane network element to set a same identifier of a media unit for data packets that belong to a same media unit.

In a possible design, the processing module 1010 is configured to: when the marking information is set for the media unit, set the marking information for a first data packet in the media unit, set the marking information for a last data packet in the media unit, or separately set the marking information for all the data packets in the media unit.

It should be understood that the apparatus 1000 according to this embodiment of this application may correspond to the user plane network element in the foregoing method embodiments, and an operation and/or a function of each module in the apparatus 1000 is intended to implement a corresponding step of the method for the user plane network element in the foregoing method embodiments. Therefore, the beneficial effects in the foregoing method embodiments can also be implemented. For brevity, details are not described herein again.

When the apparatus 1000 is an access network device or a chip in the access network device, the processing module 1010 in the apparatus 1000 may support the apparatus 1000 to perform actions of the access network device in the foregoing method examples, for example, may support the apparatus 1000 to perform step 403 and step 404 in FIG. 4.

The transceiver module 1020 may support the apparatus 1000 to communicate with a user plane network element or a session management network element. For example, the transceiver module 1020 may support the apparatus 1000 to perform step 402 in FIG. 4.

For example, the transceiver module 1020 is configured to receive a media unit that carries marking information, where the media unit includes at least one data packet. The processing module 1010 is configured to discard the media unit based on the marking information, where the marking information is for determining that the media unit is a media unit allowed to be discarded.

In a possible design, the transceiver module 1020 is configured to receive, from the session management network element, a parameter for processing a media unit. The processing module 1010 is configured to discard, when the media unit is discarded based on the marking information, the media unit based on the marking information and the parameter for processing a media unit.

In a possible design, the marking information indicates that the media unit is the media unit allowed to be discarded.

In a possible design, the marking information indicates importance information of the media unit.

The processing module 1010 is configured to discard, when the media unit is discarded based on the marking information, the media unit based on the importance information of the media unit.

In a possible design, the marking information indicates a type of the media unit. The processing module 1010 is configured to: when the media unit is determined and discarded based on the marking information, to, discard the media unit based on the type information of the media unit.

In a possible design, the parameter for processing a media unit includes a maximum quantity of discardable media units.

The processing module 1010 is configured to: when the media unit is discarded based on the marking information and the parameter for processing a media unit, discard the media unit based on the marking information when a quantity of discarded media units is less than the maximum quantity.

In a possible design, the maximum quantity of discardable media units is a maximum quantity of discardable media units in a media unit group. The processing module 1010 is configured to determine that the media unit carries an identifier of the media unit group, and determine that the media unit belongs to the media unit group.

In a possible design, the maximum quantity of discardable media units is a maximum quantity of discardable media units in a time window. The processing module 1010 is configured to determine that the media unit is located in the time window.

In a possible design, the parameter for processing a media unit includes a maximum ratio of discardable media units. The processing module 1010 is configured to: when the media unit is discarded based on the marking information and the parameter for processing a media unit, discard the media unit based on the marking information when a ratio of discarded media units is less than the maximum ratio.

In a possible design, the maximum ratio of discardable media units is a maximum ratio of discardable media units in a media unit group. The processing module 1010 is configured to determine that the media unit carries an identifier of the media unit group, and determine that the media unit belongs to the media unit group.

In a possible design, the maximum ratio of discardable media units is a maximum ratio of discardable media units in a time window. The processing module 1010 is configured to determine that the media unit is located in the time window.

In a possible design, the transceiver module 1020 is configured to: when the media unit is received, receive a data packet that carries an identifier of the media unit. The processing module 1010 is configured to determine that the data packet that carries the identifier of the media unit belongs to the media unit.

It should be understood that the apparatus 1000 according to this embodiment of this application may correspond to the access network device in the foregoing method embodiments, and an operation and/or a function of each module in the apparatus 1000 is intended to implement a corresponding step of the method for the access network device in the foregoing method embodiments. Therefore, the beneficial effects in the foregoing method embodiments can also be implemented. For brevity, details are not described herein again.

When the apparatus 1000 is a policy control network element or a chip in the policy control network element, the processing module 1010 in the apparatus 1000 may support the apparatus 1000 to perform actions of the policy control network element in the foregoing method examples, for example, may support the apparatus 1000 to perform step 510 in FIG. 5.

The transceiver module 1020 may support the apparatus 1000 to communicate with a session management network element. For example, the transceiver module 1020 may support the apparatus 1000 to perform step 500 and step 520 in FIG. 5.

For example, the processing module 1010 is configured to obtain a parameter for processing a media unit. The transceiver module 1020 is configured to send, to the session management network element, the parameter for processing a media unit.

In a possible design, the processing module 1010 is configured to obtain the parameter for processing a media unit, and generate a policy and charging control rule, where the policy and charging control rule indicates the parameter for processing a media unit. The transceiver module 1020 is configured to send the policy and charging control rule to the session management network element. In addition/Alternatively, the processing module 1010 is configured to obtain information for determining a media unit allowed to be discarded, and generate a policy and charging control rule, where the policy and charging control rule indicates the information for determining the media unit allowed to be discarded. The transceiver module 1020 is configured to send the policy and charging control rule to the session management network element.

In a possible design, the parameter for processing a media unit includes a maximum quantity of discardable media units or a maximum ratio of discardable media units.

In a possible design, the maximum quantity of discardable media units is a maximum quantity of discardable media units in a media unit group, or is a maximum quantity of discardable media units in a time window.

In a possible design, the maximum ratio of discardable media units is a maximum ratio of discardable media units in a media unit group, or is a maximum ratio of discardable media units in a time window.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

It should be understood that the apparatus 1000 according to this embodiment of this application may correspond to the policy control network element in the foregoing method embodiments, and an operation and/or a function of each module in the apparatus 1000 is intended to implement a corresponding step of the method for the policy control network element in the foregoing method embodiments. Therefore, the beneficial effects in the foregoing method embodiments can also be implemented. For brevity, details are not described herein again.

When the apparatus 1000 is a session management network element or a chip in the session management network element, the processing module 1010 in the apparatus 1000 may support the apparatus 1000 to perform actions of the session management network element in the foregoing method examples.

The transceiver module 1020 may support the apparatus 1000 to communicate with an access network device, a policy control network element, or a user plane network element. For example, the transceiver module 1020 may support the apparatus 1000 to perform step 520 and step 530 in FIG. 5.

For example, the processing module 1010 is configured to obtain a parameter for processing a media unit. The transceiver module 1020 is configured to send, to the access network device, the parameter for processing a media unit. In addition/Alternatively, the processing module 1010 is configured to obtain information for determining a media unit allowed to be discarded. The transceiver module 1020 is configured to send, to the user plane network element, the information for determining the media unit allowed to be discarded.

In a possible design, the parameter for processing a media unit includes a maximum quantity of discardable media units or a maximum ratio of discardable media units.

In a possible design, the maximum quantity of discardable media units is a maximum quantity of discardable media units in a media unit group, or is a maximum quantity of discardable media units in a time window.

In a possible design, the maximum ratio of discardable media units is a maximum ratio of discardable media units in a media unit group, or is a maximum ratio of discardable media units in a time window.

In a possible design, the information for determining the media unit allowed to be discarded includes at least one of type information of the media unit allowed to be discarded, location information of the media unit allowed to be discarded, a sequence number of the media unit allowed to be discarded, or media unit discarding allowance indication information.

In a possible design, the transceiver module 1020 is configured to send first indication information to the user plane network element, where the first indication information indicates to set marking information for a received media unit, and the marking information is for determining that the received media unit is the media unit allowed to be discarded.

In a possible design, the marking information indicates that the media unit is the media unit allowed to be discarded.

In a possible design, the transceiver module 1020 is configured to send first configuration information to the access network device, where the first configuration information indicates that a media unit corresponding to the marking information is the media unit allowed to be discarded.

In a possible design, the marking information indicates importance information of the media unit.

In a possible design, the transceiver module 1020 is configured to send second configuration information to the access network device, where the second configuration information indicates that a media unit at a preset importance level is the media unit allowed to be discarded.

In a possible design, the marking information indicates type information of the media unit.

In a possible design, the transceiver module 1020 is configured to send third configuration information to the access network device, where the third configuration information indicates that a media unit of a preset type is the media unit allowed to be discarded.

In a possible design, the transceiver module 1020 is configured to send second indication information to the user plane network element, where the second indication information indicates the user plane network element to set a same identifier of a media unit for data packets that belong to the same media unit.

In a possible design, the transceiver module 1020 is configured to send third indication information to the user plane network element, where the third indication information indicates to set a same identifier of a media unit group for media units that belong to the same media unit group.

It should be understood that the apparatus 1000 according to this embodiment of this application may correspond to the session management network element in the foregoing method embodiments, and an operation and/or a function of each module in the apparatus 1000 is intended to implement a corresponding step of the method for the session management network element in the foregoing method embodiments. Therefore, the beneficial effects in the foregoing method embodiments can also be implemented. For brevity, details are not described herein again.

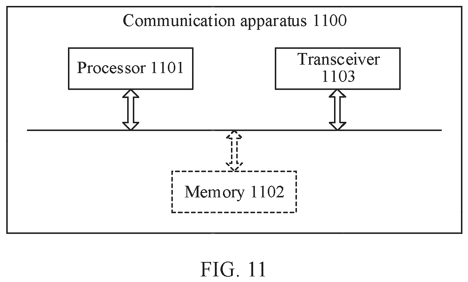

FIG. 11 is a schematic diagram of a structure of a communication apparatus 1100 according to an embodiment of this application. As shown in FIG. 11, the apparatus 1100 includes a processor 1101.

When the apparatus 1100 is a user plane network element or a chip in the user plane network element, in a possible implementation, the processor 1101 is configured to invoke an interface to perform the following actions: receiving a media unit, where the media unit includes a plurality of data packets; setting marking information for the media unit, where the marking information is for determining that the media unit is a media unit allowed to be discarded; and sending the media unit that carries the marking information.

It should be understood that the apparatus 1100 may be further configured to perform other steps and/or operations on a user plane network element side in the foregoing embodiments. For brevity, details are not described herein again.

When the apparatus 1100 is an access network device or a chip in the access network device, in a possible implementation, the processor 1101 is configured to invoke an interface to perform the following actions: receiving a media unit that carries marking information, where the media unit includes at least one data packet; and discarding the media unit based on the marking information, where the marking information is for determining that the media unit is a media unit allowed to be discarded.

It should be understood that the apparatus 1100 may be further configured to perform other steps and/or operations on an access network device side in the foregoing embodiments. For brevity, details are not described herein again.

When the apparatus 1100 is a policy control network element or a chip in the policy control network element, in a possible implementation, the processor 1101 is configured to invoke an interface to perform the following actions: obtaining a parameter for processing a media unit, generating a policy and charging control rule based on the parameter for processing a media unit, where the policy and charging control rule indicates the parameter for processing a media unit, and sending the policy and charging control rule to a session management network element; and/or obtaining information for determining a media unit allowed to be discarded, generating a policy and charging control rule based on the information for determining the media unit allowed to be discarded, where the policy and charging control rule indicates the information for determining the media unit allowed to be discarded, and sending the policy and charging control rule to the session management network element.

It should be understood that the apparatus 1100 may be further configured to perform other steps and/or operations on a policy control network element side in the foregoing embodiments. For brevity, details are not described herein again.

When the apparatus 1100 is a session management network element or a chip in the session management network element, in a possible implementation, the processor 1101 is configured to invoke an interface to perform the following actions: obtaining a parameter for processing a media unit, and sending, to an access network device, the parameter for processing a media unit; and/or obtaining information for determining a media unit allowed to be discarded, and sending, to a user plane network element, the information for determining the media unit allowed to be discarded.

It should be understood that the apparatus 1100 may be further configured to perform other steps and/or operations on a session management network element side in the foregoing embodiments. For brevity, details are not described herein again.

It should be understood that the processor 1101 may invoke the interface to perform the foregoing receiving and sending actions. The invoked interface may be a logical interface or a physical interface. This is not limited. Optionally, the physical interface may be implemented by a transceiver. Optionally, the apparatus 1100 further includes a transceiver 1103.

Optionally, the apparatus 1100 further includes a memory 1102, and the memory 1102 may store program code in the foregoing method embodiments, so that the processor 1101 invokes the program code.

Specifically, if the apparatus 1100 includes the processor 1101, the memory 1102, and the transceiver 1103, the processor 1101, the memory 1102, and the transceiver 1103 communicate with each other through an inner connection path, to transmit a control signal and/or a data signal. In a possible design, the processor 1101, the memory 1102, and the transceiver 1103 may be implemented by using a chip. The processor 1101, the memory 1102, and the transceiver 1103 may be implemented in a same chip, or may be separately implemented in different chips, or any two functions are implemented in one chip. The memory 1102 may store the program code. The processor 1101 invokes the program code stored in the memory 1102 to implement a corresponding function of the apparatus 1100.

The methods disclosed in the foregoing embodiments of this application may be applied to the processor, or may be implemented by the processor. The processor may be an integrated circuit chip and has a signal processing capability. In an implementation process, steps in the foregoing method embodiments can be implemented by a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or may be a system-on-a-chip (system-on-a-chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Distinguishing using various numerical numbers or sequence numbers in the foregoing processes are merely for ease of description, and should not constitute any limitation on the implementation processes of embodiments of this application.

It should also be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

Unless otherwise specified, an expression in this application similar to "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A media unit transmission method, wherein the method comprises:
receiving (S400), by a user plane network element, a media unit, wherein the media unit comprises a plurality of data packets;
setting (S401), by the user plane network element, marking information for the media unit, wherein the marking information is for determining that the media unit is a media unit allowed to be discarded; and
sending (S402), by the user plane network element, the media unit that carries the marking information,
wherein the setting (S401), by the user plane network element, marking information for the media unit comprises:
receiving, by the user plane network element, first indication information from the session management network element, and setting the marking information for the received media unit based on the first indication information.

2. The method according to claim 1, wherein the setting (S401), by the user plane network element, marking information for the media unit comprises:
setting, by the user plane network element, the marking information for the media unit when the media unit is the media unit allowed to be discarded.

3. The method according to claim 2, wherein the method further comprises:
receiving, by the user plane network element from a session management network element or an application server, information for determining the media unit allowed to be discarded.

4. The method according to claim 3, wherein the information for determining the media unit allowed to be discarded comprises at least one of type information of the media unit allowed to be discarded, location information of the media unit allowed to be discarded, a sequence number of the media unit allowed to be discarded, or media unit discarding allowance indication information.

5. The method according to claim 1, wherein the marking information indicates importance information of the media unit; and
the setting (S401), by the user plane network element, marking information for the media unit comprises:
determining, by the user plane network element, the importance information of the media unit; and
setting, by the user plane network element, the marking information for the media unit based on the importance information of the media unit.

6. The method according to claim 1, wherein the marking information indicates type information of the media unit; and
the setting (S401), by the user plane network element, marking information for the media unit comprises:
determining, by the user plane network element, the type information of the media unit; and
setting, by the user plane network element, the marking information for the media unit based on the type information of the media unit.

7. A media unit transmission method, wherein the method comprises:
receiving (S403), by an access network device, a media unit that carries marking information, wherein the media unit comprises at least one data packet, and the marking information is for determining that the media unit is a media unit allowed to be discarded; and
discarding, by the access network device, the media unit based on the marking information,
wherein the method further comprises:
receiving, by the access network device, a parameter that is from a session management network element and that is for processing a media unit; and
the discarding, by the access network device, the media unit based on the marking information comprises:
discarding, by the access network device, the media unit based on the marking information and the parameter for processing a media unit.

8. The method according to claim 7, wherein the marking information indicates that the media unit is the media unit allowed to be discarded.

9. The method according to claim 7, wherein the marking information indicates importance information of the media unit; and
the discarding, by the access network device, the media unit based on the marking information comprises:
discarding, by the access network device, the media unit based on the importance information of the media unit.

10. A communication apparatus, wherein the apparatus comprises:
a memory, configured to store computer instructions; and
a processor, configured to execute the computer instructions, to enable the communication apparatus to perform the method according to any one of claims 1 to 6 and claims 7 to 9.

11. A computer-readable storage medium, wherein the storage medium stores a computer program or instructions; and when the computer program or the instructions is/are executed by a communication apparatus, the method according to any one of claims 1 to 6 and claims 7 to 9 is implemented.

12. A communication system, wherein the system comprises a user plane network element and an access network device, wherein
the user plane network element is configured to perform the method according to any one of claims 1 to 6; and
the access network device is configured to perform the method according to any one of claims 7 to 9.

13. A media unit transmission method, wherein the method comprises:
receiving, by a user plane network element, a media unit, wherein the media unit comprises a plurality of data packets;
setting, by the user plane network element, marking information for the media unit, wherein the marking information is for determining that the media unit is a media unit allowed to be discarded;
sending, by the user plane network element, the media unit that carries the marking information; and
after an access network device receives the media unit that carries the marking information, discarding, by the access network device based on the marking information, the media unit that carries the marking information,
wherein the setting, by the user plane network element, marking information for the media unit comprises:
receiving, by the user plane network element, first indication information from the session management network element, and setting the marking information for the received media unit based on the first indication information.

## Patentansprüche

1. Medieneinheitsübertragungsverfahren, wobei das Verfahren Folgendes umfasst:
Empfangen (S400), durch ein Benutzerebenennetzwerkelement, einer Medieneinheit, wobei die Medieneinheit eine Vielzahl von Datenpaketen umfasst;
Einstellen (S401), durch das Benutzerebenennetzwerkelement, von Markierungsinformationen für die Medieneinheit, wobei die Markierungsinformationen zum Bestimmen dienen, dass es sich bei der Medieneinheit um eine Medieneinheit handelt, deren Verwerfen zulässig ist; und
Senden (S402), durch das Benutzerebenennetzwerkelement, der Medieneinheit, welche die Markierungsinformationen transportiert,
wobei das Einstellen (S401), durch das Benutzerebenennetzwerkelement, von Markierungsinformationen für die Medieneinheit Folgendes umfasst:
Empfangen, durch das Benutzerebenennetzwerkelement, von ersten Angabeinformationen von dem Sitzungsverwaltungsnetzwerkelement und Einstellen der Markierungsinformationen für die empfangene Medieneinheit basierend auf den ersten Angabeinformationen.

2. Verfahren nach Anspruch 1, wobei das Einstellen (S401), durch das Benutzerebenennetzwerkelement, von Markierungsinformationen für die Medieneinheit Folgendes umfasst:
Einstellen, durch das Benutzerebenennetzwerkelement, der Markierungsinformationen für die Medieneinheit, wenn die Medieneinheit die Medieneinheit ist, deren Verwerfen zulässig ist.

3. Verfahren nach Anspruch 2, wobei das Verfahren ferner Folgendes umfasst:
Empfangen, durch das Benutzerebenennetzwerkelement von einem Sitzungsverwaltungsnetzwerkelement oder einem Anwendungsserver, von Informationen zum Bestimmen, dass Verwerfen der Medieneinheit zulässig ist.

4. Verfahren nach Anspruch 3, wobei die Informationen zum Bestimmen, dass Verwerfen der Medieneinheit zulässig ist, mindestens eines von Typinformationen der Medieneinheit, deren Verwerfen zulässig ist, Standortinformationen der Medieneinheit, deren Verwerfen zulässig ist, einer Sequenznummer der Medieneinheit, deren Verwerfen zulässig ist, oder Angabeinformationen zur Zulässigkeit von Verwerfen von Medieneinheiten umfassen.

5. Verfahren nach Anspruch 1, wobei die Markierungsinformationen Wichtigkeitsinformationen der Medieneinheit angeben; und
das Einstellen (S401), durch das Benutzerebenennetzwerkelement, von Markierungsinformationen für die Medieneinheit Folgendes umfasst:
Bestimmen, durch das Benutzerebenennetzwerkelement, der Wichtigkeitsinformationen der Medieneinheit; und
Einstellen, durch das Benutzerebenennetzwerkelement, der Markierungsinformationen für die Medieneinheit basierend auf den Wichtigkeitsinformationen der Medieneinheit.

6. Verfahren nach Anspruch 1, wobei die Markierungsinformationen Typinformationen der Medieneinheit angeben; und
das Einstellen (S401), durch das Benutzerebenennetzwerkelement, von Markierungsinformationen für die Medieneinheit Folgendes umfasst:
Bestimmen, durch das Benutzerebenennetzwerkelement, der Typinformationen der Medieneinheit; und
Einstellen, durch das Benutzerebenennetzwerkelement, der Markierungsinformationen für die Medieneinheit basierend auf den Typinformationen der Medieneinheit.

7. Medieneinheitsübertragungsverfahren, wobei das Verfahren Folgendes umfasst:
Empfangen (S403), durch eine Zugangsnetzwerkeinrichtung, einer Medieneinheit, die Markierungsinformationen transportiert, wobei die Medieneinheit mindestens ein Datenpaket umfasst und die Markierungsinformationen zum Bestimmen dienen, dass es sich bei der Medieneinheit um eine Medieneinheit handelt, deren Verwerfen zulässig ist; und
Verwerfen, durch die Zugangsnetzwerkeinrichtung, der Medieneinheit basierend auf den Markierungsinformationen, wobei das Verfahren ferner Folgendes umfasst:
Empfangen, durch die Zugangsnetzwerkeinrichtung, eines Parameters, der von einem Sitzungsverwaltungsnetzwerkelement stammt und zum Verarbeiten einer Medieneinheit dient; und
das Verwerfen, durch die Zugangsnetzwerkeinrichtung, der Medieneinheit basierend auf den Markierungsinformationen Folgendes umfasst:
Verwerfen, durch die Zugangsnetzwerkeinrichtung, der Medieneinheit basierend auf den Markierungsinformationen und dem Parameter zum Verarbeiten einer Medieneinheit.

8. Verfahren nach Anspruch 7, wobei die Markierungsinformationen angeben, dass es sich bei der Medieneinheit um die Medieneinheit handelt, deren Verwerfen zulässig ist.

9. Verfahren nach Anspruch 7, wobei die Markierungsinformationen Wichtigkeitsinformationen der Medieneinheit angeben; und
das Verwerfen, durch die Zugangsnetzwerkeinrichtung, der Medieneinheit basierend auf den Markierungsinformationen Folgendes umfasst:
Verwerfen, durch die Zugangsnetzwerkeinrichtung, der Medieneinheit basierend auf den Wichtigkeitsinformationen der Medieneinheit.

10. Kommunikationsvorrichtung, wobei die Vorrichtung Folgendes umfasst:
einen Speicher, der dazu konfiguriert ist, Computeranweisungen zu speichern; und
einen Prozessor, der dazu konfiguriert ist, die Computeranweisungen auszuführen, um der Kommunikationsvorrichtung zu ermöglichen, das Verfahren nach einem der Ansprüche 1 bis 6 und der Ansprüche 7 bis 9 durchzuführen.

11. Computerlesbares Speichermedium, wobei das Speichermedium ein Computerprogramm oder Anweisungen speichert; und, wenn das Computerprogramm oder die Anweisungen durch eine Kommunikationsvorrichtung ausgeführt wird/werden, das Verfahren nach einem der Ansprüche 1 bis 6 oder der Ansprüche 7 bis 9 umgesetzt wird.

12. Kommunikationssystem, wobei das System ein Benutzerebenennetzwerkelement und eine Zugangsnetzwerkeinrichtung umfasst, wobei
das Benutzerebenennetzwerkelement dazu konfiguriert ist, das Verfahren nach einem der Ansprüche 1 bis 6 durchzuführen; und die Zugangsnetzwerkeinrichtung dazu konfiguriert ist, das Verfahren nach einem der Ansprüche 7 bis 9 durchzuführen.

13. Medieneinheitsübertragungsverfahren, wobei das Verfahren Folgendes umfasst:
Empfangen, durch ein Benutzerebenennetzwerkelement, einer Medieneinheit, wobei die Medieneinheit eine Vielzahl von Datenpaketen umfasst;
Einstellen, durch das Benutzerebenennetzwerkelement, von Markierungsinformationen für die Medieneinheit, wobei die Markierungsinformationen zum Bestimmen dienen, dass es sich bei der Medieneinheit um eine Medieneinheit handelt, deren Verwerfen zulässig ist;
Senden, durch das Benutzerebenennetzwerkelement, der Medieneinheit, welche die Markierungsinformationen transportiert; und
nachdem eine Zugangsnetzwerkeinrichtung die Medieneinheit, welche die Markierungsinformationen transportiert, empfangen hat, Verwerfen, durch die Zugangsnetzwerkeinrichtung basierend auf den Markierungsinformationen, der Medieneinheit, welche die Markierungsinformationen transportiert,
wobei das Einstellen, durch das Benutzerebenennetzwerkelement, von Markierungsinformationen für die Medieneinheit Folgendes umfasst:
Empfangen, durch das Benutzerebenennetzwerkelement, von ersten Angabeinformationen von dem Sitzungsverwaltungsnetzwerkelement und Einstellen der Markierungsinformationen für die empfangene Medieneinheit basierend auf den ersten Angabeinformationen.

## Revendications

1. Procédé de transmission d'unité multimédia, dans lequel le procédé comprend :
la réception (S400), par un élément de réseau de plan utilisateur, d'une unité multimédia, dans laquelle l'unité multimédia comprend une pluralité de paquets de données ;
la définition (S401), par l'élément de réseau de plan utilisateur, d'informations de marquage pour l'unité multimédia, dans lequel les informations de marquage servent à déterminer que l'unité multimédia est une unité multimédia pouvant être mise au rebut ; et
l'envoi (S402), par l'élément de réseau de plan utilisateur, de l'unité multimédia qui transporte les informations de marquage, dans lequel la définition (S401), par l'élément de réseau de plan utilisateur, d'informations de marquage pour l'unité multimédia comprend :
la réception, par l'élément de réseau de plan utilisateur, de premières informations d'indication à partir de l'élément de réseau de gestion de session, et la définition des informations de marquage pour l'unité multimédia reçue sur la base des premières informations d'indication.

2. Procédé selon la revendication 1, dans lequel la définition (S401), par l'élément de réseau de plan utilisateur, d'informations de marquage pour l'unité multimédia comprend :
la définition, par l'élément de réseau de plan utilisateur, des informations de marquage pour l'unité multimédia lorsque l'unité multimédia est l'unité multimédia pouvant être mise au rebut.

3. Procédé selon la revendication 2, dans lequel le procédé comprend en outre :
la réception, par l'élément de réseau de plan utilisateur à partir d'un élément de réseau de gestion de session ou d'un serveur d'application, d'informations permettant de déterminer l'unité multimédia autorisée à être mise au rebut.

4. Procédé selon la revendication 3, dans lequel les informations permettant de déterminer l'unité multimédia pouvant être mise au rebut comprennent au moins l'un d'une information de type de l'unité multimédia pouvant être mise au rebut, d'une information de localisation de l'unité multimédia pouvant être mise au rebut, d'un numéro de séquence de l'unité multimédia pouvant être mise au rebut, ou d'une information d'indication d'autorisation de mise au rebut de l'unité multimédia.

5. Procédé selon la revendication 1, dans lequel les informations de marquage indiquent des informations d'importance de l'unité multimédia ; et
la définition (S401), par l'élément de réseau de plan utilisateur, d'informations de marquage pour l'unité multimédia comprend :
la détermination, par l'élément de réseau de plan utilisateur, des informations d'importance de l'unité multimédia ; et
la définition, par l'élément de réseau de plan utilisateur, des informations de marquage pour l'unité multimédia sur la base des informations d'importance de l'unité multimédia.

6. Procédé selon la revendication 1, dans lequel les informations de marquage indiquent des informations de type de l'unité multimédia ; et
la définition (S401), par l'élément de réseau de plan utilisateur, d'informations de marquage pour l'unité multimédia comprend :
la détermination, par l'élément de réseau de plan utilisateur, des informations de type de l'unité multimédia ; et
la définition, par l'élément de réseau de plan utilisateur, des informations de marquage pour l'unité multimédia sur la base des informations de type de l'unité multimédia.

7. Procédé de transmission d'unité multimédia, dans lequel le procédé comprend :
la réception (S403), par un dispositif de réseau d'accès, d'une unité multimédia qui transporte des informations de marquage, dans lequel l'unité multimédia comprend au moins un paquet de données, et les informations de marquage servent à déterminer que l'unité multimédia est une unité multimédia pouvant être mise au rebut ; et
la mise au rebut, par le dispositif de réseau d'accès, de l'unité multimédia sur la base des informations de marquage, dans lequel le procédé comprend en outre :
la réception, par le dispositif de réseau d'accès, d'un paramètre qui provient d'un élément de réseau de gestion de session et qui sert au traitement d'une unité multimédia ; et
la mise au rebut, par le dispositif de réseau d'accès, de l'unité multimédia sur la base des informations de marquage comprend :
la mise au rebut, par le dispositif de réseau d'accès, de l'unité multimédia sur la base des informations de marquage et du paramètre pour le traitement d'une unité multimédia.

8. Procédé selon la revendication 7, dans lequel les informations de marquage indiquent que l'unité multimédia est l'unité multimédia pouvant être mise au rebut.

9. Procédé selon la revendication 7, dans lequel les informations d'indication indiquent les informations d'importance de l'unité multimédia ; et
la mise au rebut, par le dispositif de réseau d'accès, de l'unité multimédia sur la base des informations de marquage comprend :
la mise au rebut, par le dispositif de réseau d'accès, de l'unité multimédia sur la base des informations d'importance de l'unité multimédia.

10. Appareil de communication, dans lequel l'appareil comprend :
une mémoire, configurée pour stocker des instructions informatiques ; et
un processeur, configuré pour exécuter les instructions informatiques, pour permettre à l'appareil de communication de réaliser le procédé selon l'une quelconque des revendications 1 à 6 et des revendications 7 à 9.

11. Support de stockage lisible par ordinateur, dans lequel le support de stockage stocke un programme informatique ou des instructions ; et lorsque le programme informatique ou les instructions sont exécutés par un appareil de communication, le procédé selon l'une quelconque des revendications 1 à 6 et 7 à 9 est mis en œuvre.

12. Système de communication, dans lequel le système comprend un élément de réseau de plan utilisateur et un dispositif de réseau d'accès, dans lequel
l'élément de réseau de plan utilisateur est configuré pour réaliser le procédé selon l'une quelconque des revendications 1 à 6 ; et
le dispositif de réseau d'accès est configuré pour réaliser le procédé selon l'une quelconque des revendications 7 à 9.

13. Procédé de transmission d'unité multimédia, dans lequel le procédé comprend :
la réception, par un élément de réseau de plan utilisateur, d'une unité multimédia, dans lequel l'unité multimédia comprend une pluralité de paquets de données ;
la définition, par l'élément de réseau de plan utilisateur, d'informations de marquage pour l'unité multimédia, dans lequel les informations de marquage servent à déterminer que l'unité multimédia est une unité multimédia pouvant être mise au rebut ;
l'envoi, par l'élément de réseau de plan utilisateur, de l'unité multimédia qui transporte les informations de marquage ; et
après qu'un dispositif de réseau d'accès reçoit l'unité multimédia qui transporte les informations de marquage, la mise au rebut, par le dispositif de réseau d'accès sur la base des informations de marquage, de l'unité multimédia qui transporte les informations de marquage,
dans lequel la définition, par l'élément de réseau de plan utilisateur, d'informations de marquage pour l'unité multimédia comprend :
la réception, par l'élément de réseau de plan utilisateur, de premières informations d'indication à partir de l'élément de réseau de gestion de session, et la définition des informations de marquage pour l'unité multimédia reçue sur la base des premières informations d'indication.
